# EUROPEAN PATENT SPECIFICATION

(11) **EP 4 449 357 B1**
(45) Date of publication and mention of the grant of the patent: **23.09.2026**
(21) Application number: 23740086.6
(22) Date of filing: 13.01.2023
(51) Int. Cl.: G06T 7/80, G06T 7/70, G06T 7/73

(54) **METHODS AND SYSTEMS FOR CORRECTING POSITIONING DEVIATION**
VERFAHREN UND SYSTEME ZUR KORREKTUR VON POSITIONIERUNGSABWEICHUNGEN
PROCÉDÉS ET SYSTÈMES DE CORRECTION D'ÉCART DE POSITIONNEMENT

(30) Priority: 14.01.2022 CN 202210046484
(43) Date of publication of application: 23.10.2024
(73) Proprietor: Zhejiang Dahua Technology Co., Ltd., Hangzhou, Zhejiang 310053 (CN)
(72) Inventor: YE, Yanbin, Hangzhou, Zhejiang 310053 (CN); HE, Zengfan, Hangzhou, Zhejiang 310053 (CN); XIA, Chaoping, Hangzhou, Zhejiang 310053 (CN)
(74) Representative: Wang, Bo
(86) International application number: PCT/CN2023/072083
(87) International publication number: WO 2023/134745

(56) References cited:
- CN-A- 108 051 831
- CN-A- 111 553 956
- CN-A- 112 017 246
- CN-A- 114 565 677
- JP-A- 2002 232 874
- US-A1- 2018 084 239
- US-A1- 2018 307 238
- US-A1- 2021 042 962
- DONG HANG ET AL: "Pose estimation with correspondences determination", PROCEEDINGS OF SPIE; [PROCEEDINGS OF SPIE ISSN 0277-786X VOLUME 10524], SPIE, US, vol. 10621, 12 January 2018 (2018-01-12), pages 106210V - 106210V, XP060099074, ISBN: 978-1-5106-1533-5, DOI: 10.1117/12.2287303

## Description

### CROSS-REFERENCE TO RELATED APPLICATIONS

This application claims priority to Chinese Patent Application No. 202210046484.8 filed on January 14, 2022.

### TECHNICAL FIELD

This present disclosure relates to the field of positioning technology, and in particular, to methods and systems for correcting positioning deviation.

### BACKGROUND

With the development of positioning technology, target monitoring (e.g., forest fire monitoring) is generally realized by setting up a capture device in a target area. However, due to possible errors (e.g., an installation deviation, a deviation caused by long-term use) of the capture device, a deviation .may exist in detected positioning information of a target. Therefore, it is desirable to provide methods and system for correcting positioning deviation to improve the positioning accuracy of the target. CN111553956 discloses a calibration method for roadside or traffic cameras. Instead of manually placing a calibration plate, it uses reference points on static environmental objects, such as guardrails or lane-line endpoints. An image containing these points is acquired, their pixel coordinates are extracted, and their world coordinates are retrieved from a high-precision map according to the camera position. These correspondences determine the camera external parameters efficiently.

JP2002232874 discloses a vehicle-camera calibration method for detecting deviation between the camera's actual imaging direction and a preset direction. Two or more targets are imaged, their image positions are detected, and the distance between them is used to correct variation in the imaging range. The corrected reference target position is then compared with the detected target position. The resulting deviation corrects vanishing-point or road-detection settings for safer vehicle perception tasks.

### SUMMARY

An aspect of the present disclosure provides a method for correcting positioning deviation. The method is disclosed in claim 1.

An aspect of the present disclosure provides a system for correcting positioning deviation, which is disclosed in claim 7.

An aspect of the present disclosure provides a non-transitory computer-readable storage medium, which is disclosed in claim 10.

An aspect of the present disclosure provides a positioning method. The positioning method includes: obtaining target PTZ attitude information when a capture device captures a target image of a target; obtaining deviation information of the capture device, wherein the deviation information is determined based on geographic position information and image position information corresponding to at least two geographic reference points; and determining target positioning information of the target based on the target PTZ attitude information and the deviation information of the capture device.

Additional features will be set forth in part in the description which follows, and in part will become apparent to those skilled in the art upon examination of the following and the accompanying drawings or may be learned by production or operation of the examples. The features of the present disclosure may be realized and attained by practice or use of various aspects of the methodologies, instrumentalities, and combinations set forth in the detailed examples discussed below.

### BRIEF DESCRIPTION OF THE DRAWINGS

The present disclosure is further illustrated in terms of exemplary embodiments, and these exemplary embodiments are described in detail with reference to the drawings. These embodiments are not restrictive. In these embodiments, the same number indicates the same structure, wherein:
FIG. 1 is a schematic diagram illustrating an exemplary positioning deviation correction system according to some embodiments of the present disclosure;
FIG. 2 is a schematic diagram illustrating exemplary hardware and/or software components of an exemplary computing device according to some embodiments of the present disclosure;
FIG. 3 is a block diagram illustrating an exemplary processing device according to some embodiments of the present disclosure;
FIG. 4 is a flowchart illustrating an exemplary process for correcting positioning deviation according to some embodiments of the present disclosure;
FIG. 5 is a schematic diagram illustrating exemplary geographic reference points according to some embodiments of the present disclosure;
FIG. 6 is a flowchart illustrating an exemplary process for determining deviation information of a capture device according to some embodiments of the present disclosure;
FIG. 7 is a schematic diagram illustrating an exemplary Pan-Tilt-Zoom (PTZ) reference coordinate system according to some embodiments of the present disclosure;
FIG. 8 is a flowchart illustrating an exemplary process for determining deviation information of a capture device according to other embodiments of the present disclosure;
FIG. 9 is a flowchart illustrating an exemplary process for determining target positioning information of a target according to some embodiments of the present disclosure;
FIG. 10 is a flowchart illustrating an exemplary process for determining target positioning information of a target according to other embodiments of the present disclosure;
FIG. 11 is a schematic diagram illustrating an exemplary process for determining target positioning information of a target according to some embodiments of the present disclosure; and
FIG. 12 is a flowchart illustrating an exemplary process for determining target positioning information of a target according to some embodiments of the present disclosure.

### DETAILED DESCRIPTION

In order to illustrate the technical solutions related to the embodiments of the present disclosure, brief introduction of the drawings referred to in the description of the embodiments is provided below. Obviously, drawings described below are only some examples or embodiments of the present disclosure. Those having ordinary skills in the art, without further creative efforts, may apply the present disclosure to other similar scenarios according to these drawings. Unless stated otherwise or obvious from the context, the same reference numeral in the drawings refers to the same structure and operation.

It will be understood that the terms "system," "device," "unit," and/or "module" used herein are one method to distinguish different components, elements, parts, sections, or assemblies of different levels in ascending order. However, the terms may be displaced by other expressions if they may achieve the same purpose.

As shown in the present disclosure and claims, unless the context clearly indicates exceptions, the words "a," "an," "one," and/or "the" do not specifically refer to the singular, but may also include the plural. The terms "including" and "comprising" only suggest that the steps and elements that have been clearly identified are included, and these steps and elements do not constitute an exclusive list, and the method or device may also include other steps or elements.

The flowcharts used in the present disclosure may illustrate operations executed by the system according to embodiments in the present disclosure. It should be understood that a previous operation or a subsequent operation of the flowcharts may not be accurately implemented in order. Conversely, various operations may be performed in inverted order, or simultaneously. Moreover, other operations may be added to the flowcharts, and one or more operations may be removed from the flowcharts.

An aspect of the present disclosure relates to systems and methods for correcting positioning deviation. The system may obtain geographic position information and image position information (which is obtained based on reference image(s) captured by a capture device) corresponding to at least two geographic reference points. Then the system may determine deviation information of the capture device based on the geographic position information and the image position information. Further, the system may also determine target positioning information of a target based on target Pan-Tilt-Zoom (PTZ) attitude information when the capture device captures a target image of the target and the deviation information of the capture device.

According to the embodiments of the present disclosure, at least two geographic reference points is selected and geographic position information and image position information of the at least two geographic reference points are determined. Accordingly, installation deviation information of the capture device can be accurately determined based on a correspondence between the geographic position information and the image position information, which can provide accurate and reliable data support for subsequent target positioning, thereby improving the positioning efficiency and accuracy.

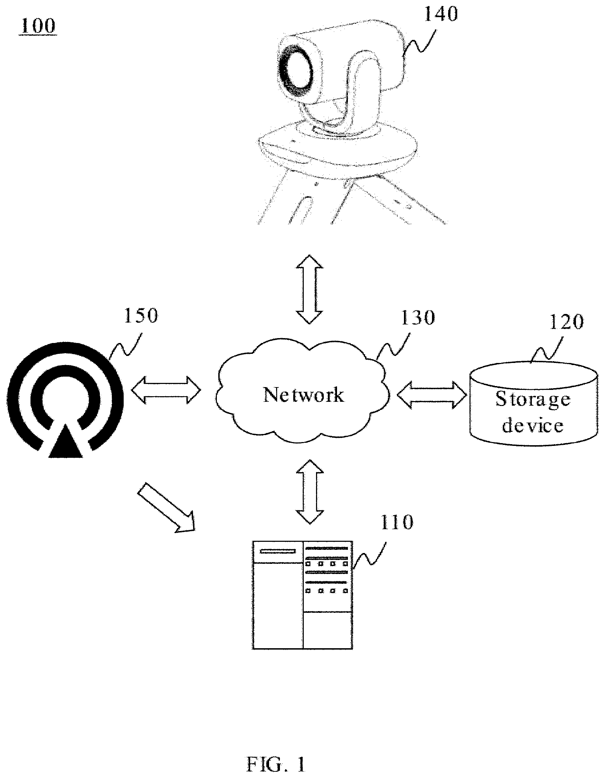

FIG. 1 is a schematic diagram illustrating an exemplary positioning deviation correction system according to some embodiments of the present disclosure. In some embodiments, the positioning deviation correction system 100 may be applied to various scenarios, such as forest fire prevention, coal mine safety risk detection, environmental protection automatic inspection, urban security, port shipping safety guarantee, etc. As illustrated in FIG. 1, the positioning deviation correction system 100 may include a processing device 110, a storage device 120, a network 130, a monitoring device 140, and a positioning device 150. In some embodiments, the processing device 110, the storage device 120, the monitoring device 140, and the positioning device 150 may be connected to and/or communicate with each other via a wireless connection, a wired connection, or a combination thereof.

The processing device 110 may process data and/or information associated with the positioning deviation correction system 100. For example, the processing device 110 may determine deviation information of a capture device based on geographic position information of at least two geographic reference points and image position information corresponding to the at least two geographic reference points. As another example, the processing device 110 may determine target positioning information of a target based on the deviation information of the capture device and target PTZ attitude information when the capture device captures a target image of the target.

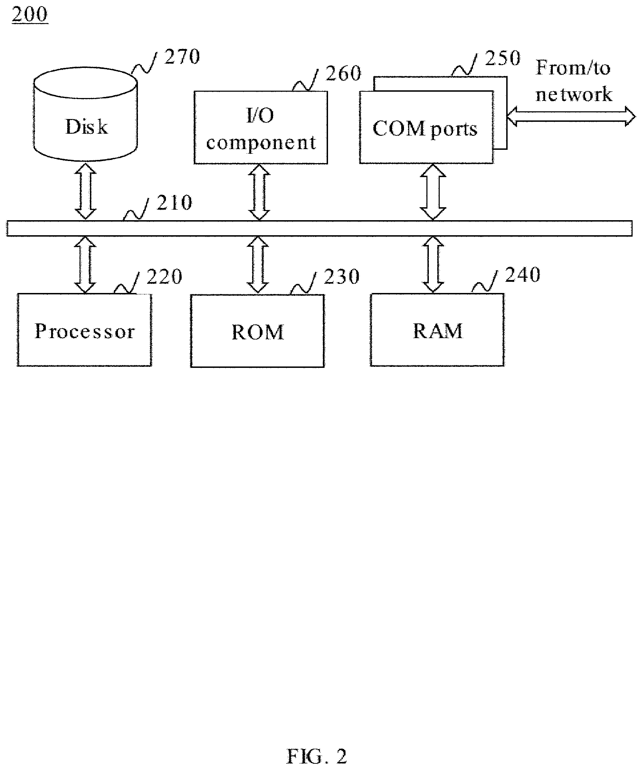

In some embodiments, the processing device 110 may be a single server or a server group. The server group may be centralized or distributed. In some embodiments, the processing device 110 may be local or remote. In some embodiments, the processing device 110 may be implemented on a cloud platform. Merely by way of example, the cloud platform may include a private cloud, a public cloud, a hybrid cloud, a community cloud, a distributed cloud, an inter-cloud, a multi-cloud, or the like, or any combination thereof. In some embodiments, the processing device 110 may be implemented on a computing device 200 including one or more components illustrated in FIG. 2 of the present disclosure.

The storage device 120 may store data, instructions, and/or any other information associated with positioning deviation correction. In some embodiments, the storage device 120 may store data obtained from the processing device 110, the monitoring device 140, and/or the positioning device 150. For example, the storage device 120 may store geographic position information and image position information of at least two geographic reference points. As another example, the storage device 120 may store reference PTZ attitude information when a capture device captures reference image(s) of the geographic reference point(s), target PTZ attitude information when the capture device captures a target image of a target, etc. In some embodiments, the storage device 120 may store data and/or instructions that the processing device 110 may execute or use to perform exemplary methods described in the present disclosure.

In some embodiments, the storage device 120 may include a mass storage, removable storage, a volatile read-and-write memory, a read-only memory (ROM), or the like, or any combination thereof. Exemplary mass storage may include a magnetic disk, an optical disk, a solid-state drive, etc. Exemplary removable storage may include a flash drive, a floppy disk, an optical disk, a memory card, a zip disk, a magnetic tape, etc. Exemplary volatile read-and-write memory may include a random access memory (RAM). Exemplary RAM may include a dynamic RAM (DRAM), a double date rate synchronous dynamic RAM (DDR SDRAM), a static RAM (SRAM), a thyristor RAM (T-RAM), and a zero-capacitor RAM (Z-RAM), etc. Exemplary ROM may include a mask ROM (MROM), a programmable ROM (PROM), an erasable programmable ROM (EPROM), an electrically erasable programmable ROM (EEPROM), a compact disk ROM (CD-ROM), and a digital versatile disk ROM, etc. In some embodiments, the storage device 120 may be implemented on a cloud platform. In some embodiments, the storage device 120 may be integrated into the processing device 110 and/or the monitoring device 140.

The network 130 may include any suitable network that may facilitate the exchange of information and/or data for the positioning deviation correction system 100. In some embodiments, one or more components (e.g., the processing device 110, the storage device 120, the monitoring device 140, the positioning device 150) of the positioning deviation correction system 100 may communicate information and/or data with one or more other components of the positioning deviation correction system 100 via the network 130. For example, the processing device 110 may obtain the geographic position information and the image position information of the at least two geographic reference points from the storage device 120 via the network 130.

In some embodiments, the network 130 may be and/or include a public network (e.g., the Internet), a private network (e.g., a local area network (LAN), a wide area network (WAN))), a wired network (e.g., an Ethernet network), a wireless network (e.g., an 802.11 network, a Wi-Fi network), a cellular network (e.g., a Long Term Evolution (LTE) network), a frame relay network, a virtual private network (VPN), a satellite network, a telephone network, routers, hubs, switches, server computers, and/or any combination thereof. In some embodiments, the network 130 may include one or more network access points. For example, the network 130 may include wired and/or wireless network access points such as base stations and/or internet exchange points through which one or more components of the positioning deviation correction system 100 may be connected to the network 130 to exchange data and/or information.

The monitoring device 140 may be configured to monitor a target area (e.g., a forest, a mine, natural environment, a security area of a city) or a target in the target area. In some embodiments, the monitoring device 140 may include a capture device, an auxiliary device used for installing the capture device, etc. For example, the capture device may include a camera and a PTZ device, such as a monocular camera, a bifocal PTZ, etc. In some embodiments, the monitoring device 140 may obtain image information of the target area or the target in the target area. In some embodiments, the monitoring device 140 may send the obtained image information to the storage device 120 through the network 130 for storage, or to the processing device 110 for data processing. In some embodiments, the monitoring device 140 may also include a built-in storage device and a processor, which may respectively be configured to store and process images obtained by the capture device.

The positioning device 150 may be configured to locate a target (e.g., a target position) in the target area. The target position may include a forest fire point, an abnormal mine device, a criminal hideout, a ship position in a port, or the like, or a combination thereof. In some embodiments, the positioning device 150 may include, but not limited to, a device capable of positioning, such as a handheld locating device, a handheld locator, a terminal device (e.g., a mobile device, a wearable device), or the like, or a combination thereof.

In some embodiments, the positioning device 150 may communicate with the processing device 110 and/or the storage device 120 through the network 130. For example, the positioning device 150 may send the obtained positioning information in the target area to the storage device 120 through the network 130 for storage. As another example, the positioning device 150 may send the obtained positioning information in the target area to the processing device 110 for processing.

It should be noted that the above description is merely provided for the purposes of illustration, and not intended to limit the scope of the present disclosure. For persons having ordinary skills in the art, plurality of variations and modifications may be made under the teachings of the present disclosure. However, those variations and modifications do not depart from the scope of the present disclosure.

FIG. 2 is a schematic diagram illustrating exemplary hardware and/or software components of an exemplary computing device according to some embodiments of the present disclosure. In some embodiments, one or more components of the positioning deviation correction system 100 may be implemented on the computing device 200. For example, the processing device 110 may be implemented on the computing device 200 and configured to perform functions of the processing device 110 disclosed in this disclosure.

The computing device 200, for example, may include COM ports 250 connected to and from a network connected thereto to facilitate data communications. The computing device 200 may also include a processor 220, in the form of one or more processors, for executing program instructions. For example, the processor 220 may include interface circuits and processing circuits therein. The interface circuits may be configured to receive electronic signals from a bus 210, wherein the electronic signals encode structured data and/or instructions for the processing circuits to process. The processing circuits may conduct logic calculations, and then determine a conclusion, a result, and/or an instruction encoded as electronic signals. Then the interface circuits may send out the electronic signals from the processing circuits via the bus 210.

The computing device 200 may include a program storage and a data storage of different forms, for example, a disk 270, and a read-only memory (ROM) 230, or a random access memory (RAM) 240, for storing various data files to be processed and/or transmitted by the computing device 200. The computing device 200 may also include program instructions stored in the ROM 230, the RAM 240, and/or another type of non-transitory storage medium to be executed by the processor 220. The methods and/or processes of the present disclosure may be implemented as the program instructions. The computing device 200 may also include an I/O component 260, supporting input/output between the computing device 200 and other components. The computing device 200 may also receive programming and data via network communications.

Merely for illustration, only one processor 220 is described in the computing device 200. However, it should be noted that the computing device 200 in the present disclosure may also include plurality of processors, thus operations and/or method steps that are performed by one processor 220 as described in the present disclosure may also be jointly or separately performed by the plurality of CPUs/processors.

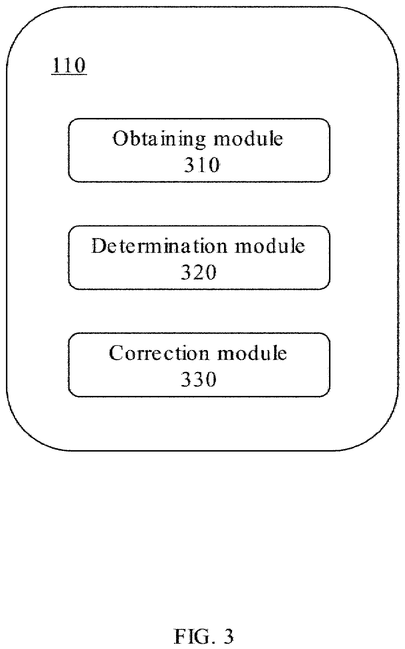

FIG. 3 is a block diagram illustrating an exemplary processing device according to some embodiments of the present disclosure. In some embodiments, the processing device 110 may include an obtaining module 310, a determination module 320, and a correction module 330.

The obtaining module 310 may be configured to obtain geographic position information of at least two geographic reference points.

The determination module 320 may be configured to obtain a reference image of the geographic reference point. In some embodiments, for each of the at least two geographic reference points, the determination module 320 may be configured to obtain a reference image of the geographic reference point collected by the capture device, the reference image including image position information of an image reference point corresponding to the geographic reference point.

In some embodiments, when the capture device captures the reference image of the geographic reference point, the image reference point corresponding to the geographic reference point may be located at a center of a capture view of the capture device.

The correction module 330 may be configured to determine deviation information of the capture device. In some embodiments, the correction module 330 may determine the deviation information of the capture device based on the geographic position information and image position information corresponding to the at least two geographic reference points. In some embodiments, the deviation information may include at least one of an angular deviation or a translational deviation.

In some embodiments, for each of the at least two geographic reference points, the correction module 330 may be further configured to obtain reference Pan-Tilt-zoom (PTZ) attitude information corresponding to the reference image, determining the deviation information of the capture device based on the geographic position information corresponding to the at least two geographic reference points, the image position information corresponding to the at least two geographic reference points, and the reference PTZ attitude information. Wherein, the reference PTZ attitude information may include a reference PTZ pitch angle and a reference PTZ yaw angle when the capture device obtains the reference image.

In some embodiments, the correction module 330 may be further configured to construct a geographic position matrix based on the geographic position information; to construct an image position matrix based on the image position information; to construct a PTZ rotation matrix based at least in part on the reference PTZ attitude information; to determine the deviation information of the capture device based on the geographic position matrix, the image position matrix, and the PTZ rotation matrix.

In some embodiments, the correction module 330 may be further configured to construct the PTZ rotation matrix based on the PTZ attitude information and a part of the deviation information; construct a deviation matrix corresponding to the deviation information; solve the deviation information based on the geographic position matrix, the image position matrix, the PTZ rotation matrix, and the deviation matrix. As used herein, the deviation information may at least include an angular deviation, and the angular deviation may include a yaw angle error, a roll angle error, and a pitch angle error.

In some embodiments, the correction module 330 may also be configured to obtain target PTZ attitude information when the capture device obtains a target image of a target; determine target positioning information of the target based on the target PTZ attitude information and the deviation information of the capture device.

In some embodiments, the correction module 330 may be further configured to determine preliminary positioning information of the target based on the target PTZ attitude information and the yaw angle error included in the deviation information; determine the target positioning information of the target based on the preliminary positioning information and the roll angle error and the pitch angle error included in the deviation information.

In some embodiments, the correction module 330 may be further configured to perform a coordinate transformation operation on the preliminary positioning information; obtain corrected positioning information by correcting the transformed preliminary positioning information based on the roll angle error and the pitch angle error; obtain the target positioning information of the target by performing an inverse transformation operation on the corrected positioning information.

In some embodiments, the correction module 330 may be further configured to determine corrected target PTZ attitude information based on the target PTZ attitude information and the deviation information; obtain device positioning information of the capture device; determine a horizontal distance between the target and the capture device; determine the target positioning information of the target based on the device positioning information, the corrected target PTZ attitude information, and the horizontal distance.

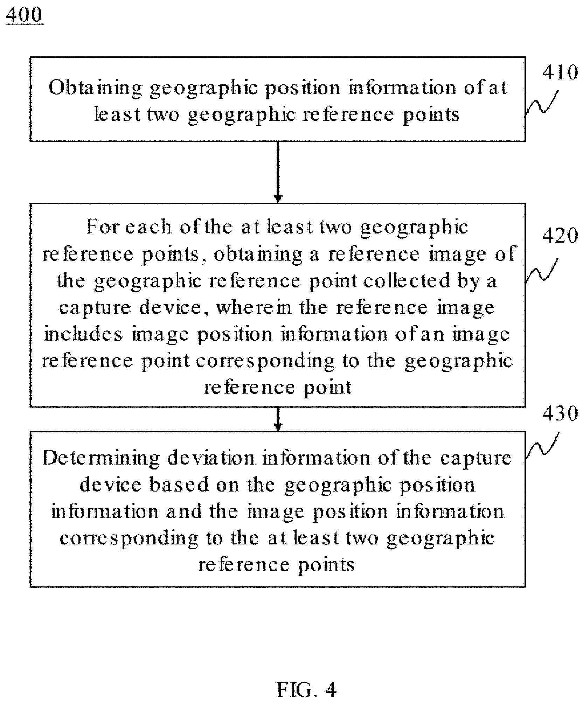

More detailed descriptions may be found elsewhere in the present disclosure, for example, FIG. 4 and the descriptions thereof.

It should be noted that the above description of the processing device 110 and its modules is only for convenience of description, and cannot limit the present disclosure to the scope of the examples cited. It can be understood that for those skilled in the art, after understanding the principle of the system, it is possible to combine various modules arbitrarily, or form a subsystem to connect with other modules without departing from this principle. In some embodiments, the obtaining module 310, the determination module 320, and the correction module 330 may be different modules in one system, or one module may realize the functions of the above-mentioned two or more modules. For example, each module may share one storage module, or each module may have its own storage module. Variations such as these are within the scope of protection of the present disclosure.

FIG. 4 is a flowchart illustrating an exemplary process for correcting positioning deviation according to some embodiments of the present disclosure. In some embodiments, process 400 may be executed by the positioning deviation correction system 100. For example, the process 400 may be implemented as a set of instructions stored in the storage device (e.g., the storage device 120). In some embodiments, the processing device 110 (e.g., the processor 220 of the computing device 200 and/or one or more modules illustrated in FIG. 3) may execute the set of instructions and may accordingly be directed to perform the process 400. The operations of the illustrated process presented below are intended to be illustrative. In some embodiments, the process 400 may be accomplished with one or more additional operations not described and/or without one or more of the operations discussed. Additionally, the order of the operations of process 400 illustrated in FIG. 3 and described below is not intended to be limiting.

In 410, the processing device 110 (e.g., the obtaining module 310, processor 220) may obtain geographic position information of at least two geographic reference points.

The geographic reference point may refer to a position point in geographic reality and used for reference for positioning. In some embodiments, the at least two geographic reference points may be manually determined or determined by the processing device 110. Merely by way of example, the processing device 110 may determine at least two reference points (also referred to as a "marking point" or a "calibration point") in a capture view of a capture device (e.g., the capture device of the monitoring device 140) based on a user instruction. Further, the processing device 110 may determine at least two position points in the geographic reality corresponding to the at least two reference points as the at least two geographic reference points.

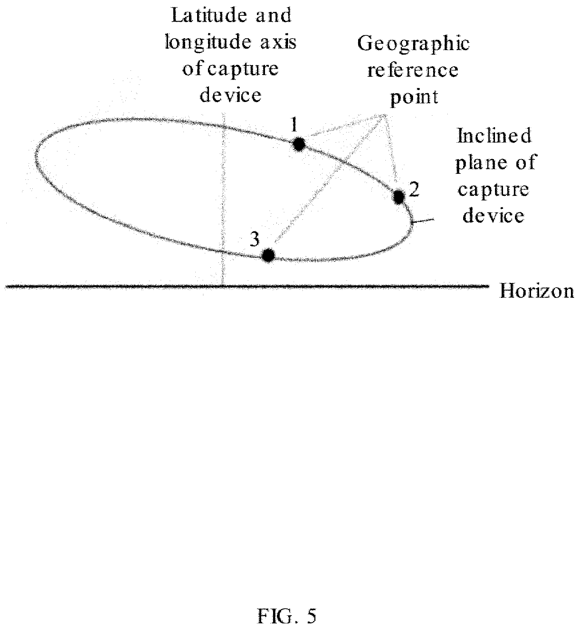

In some embodiments, the at least two geographic reference points may be relatively easily accessible positions in the geographic reality. In some embodiments, a distance among the at least two geographic reference points may be greater than a preset distance threshold (which may be a default value of the positioning deviation correction system 100, or may be set by a user). In some embodiments, the at least two geographic reference points may be located on a same straight line. In some embodiments, the at least two geographic reference points may be located on different lines. For example, as shown in FIG. 5, geographic reference point 1, geographic reference point 2, and geographic reference point 3 are located on different straight lines. It should be noted that FIG. 5 is a schematic diagram illustrating three geographic reference points and a plane where the capture device is located. As shown in FIG. 5, due to installation error of the capture device, the plane where the capture device is located may be a plane that is inclined relative to the horizontal plane. Accordingly, when the capture device captures image(s) of the three geographic reference points, the three geographic reference points may be located on the inclined plane where the capture device is located. In fact, it should be understood that the three geographic reference points are actually located on the ground plane in the geographic reality.

The geographic position information may refer to positioning information of an actual position point in the geographic reality. In some embodiments, the geographic position information may be represented by longitude, latitude, and altitude. For example, geographic position information of an i-th geographic reference point may be expressed as *rp*(*longᵢ, latᵢ, altiᵢ*), wherein *longᵢ* represents longitude information of the i-th geographic reference point, *latᵢ* represents latitude information of the i-th geographic reference point, and *altiᵢ* represents altitude information of the i-th geographic reference point.

In some embodiments, the geographic position information may include GPS positioning information, satellite positioning information, or the like, or a combination thereof. In some embodiments, the processing device 110 may obtain the geographic position information of the geographic reference point through GPS positioning, satellite remote sensing technology, or the like, or a combination thereof. In some embodiments, the processing device 110 may obtain the geographic position information of the at least two geographic reference points from the positioning device 150 (e.g., a handheld locating device, a handheld locator, a mobile device). For example, the positioning device 150 may be located at a geographic reference point and send corresponding positioning information to the processing device 110.

In some embodiments, the processing device 110 may determine the geographic position information of the at least two geographic reference points according to a positioning model.

In some embodiments, the positioning model may include a machine learning model, for example, a neural network model. For example, the neural network model may include a convolutional neural network (CNN), a deep neural network (DNN), or the like, or any combination thereof.

In some embodiments, take a specific geographic reference point as an example, an input of the positioning model may include initial positioning information (e.g., positioning information obtained from the positioning device 150) of the geographic reference point and a vegetation coverage rate of the geographic reference point; an output of the positioning model may include the geographic position information of the geographic reference point. In some embodiments, the vegetation coverage rate may indicate an extent to which the geographic reference point is covered by vegetation, which may be obtained based on satellite images, images taken by drones, etc.

In some embodiments, the positioning model may be obtained through training based on a plurality of first training samples. In some embodiments, the first training sample may include a sample vegetation coverage rate and sample initial positioning information of a sample geographic reference point. A corresponding first label may include actual geographic position information of the sample geographic reference point.

In some embodiments, the positioning model may be trained iteratively until a termination condition is satisfied. In response to that the termination condition is satisfied, the positioning model may be finalized. In some embodiments, the termination condition may relate to a value of a loss function. For example, the termination condition may be deemed satisfied if the value of the loss function is minimal or smaller than a predetermined threshold. As another example, the termination condition may be deemed satisfied if the value of the loss function converges. In some embodiments, "convergence" may refer to that the variation of the values of the loss function in two or more consecutive iterations is equal to or smaller than a predetermined threshold. In some embodiments, "convergence" may refer to that a difference between the value of the loss function and a target value is equal to or smaller than a predetermined threshold. In some embodiments, the termination condition may be deemed satisfied when a specified count of iterations have been performed in the training process.

According to the embodiments of the present disclosure, the initial geographic position information of the geographic reference point is corrected or processed through a positioning model, which can fully consider various factors (e.g., the vegetation coverage rate) that may cause positioning deviations and improve positioning accuracy.

In 420, for each of the at least two geographic reference points, the processing device 110 (e.g., the determination module 320, processor 220) may obtain a reference image of the geographic reference point collected by the capture device.

In some embodiments, the reference image may include image position information of an image reference point corresponding to the geographic reference point.

The image reference point (also referred to as a "marking point" or "calibration point") may refer to a corresponding position point of the geographic reference point in a capture view of the capture device. Accordingly, the reference image may refer to an image including the geographic reference point collected by the capture device. In some embodiments, the processing device 110 may control the capture device to perform a capture operation on the geographic reference point and obtain a reference image of the geographic reference point.

In some embodiments, when the capture device captures the reference image of the geographic reference point, the image reference point corresponding to the geographic reference point may be located at a center of the capture view of the capture device. For example, when the capture device performs a capture operation on the geographic reference point, the PTZ where the capture device is located may be rotated to a certain position, so that the image reference point corresponding to the geographic reference point may be located at the center of the capture view of the capture device.

The image position information may refer to position information (e.g., coordinate) of the image reference point in the reference image. In some embodiments, the processing device 110 may establish an image coordinate system based on the reference image and determine the image position information of the image reference point based on the image coordinate system.

In some embodiments, the processing device 110 may define a vertex at an upper left corner of the reference image as a coordinate origin, a line pointing to an upper right corner of the image as a horizontal axis (i.e., x-axis), and a line pointing to a lower left corner of the image as a vertical axis (i.e., y-axis) to establish a Cartesian coordinate system. Further, the processing device 110 may determine a position of the image reference point in the established Cartesian coordinate system as the image position information of the image reference point. For example, image position information of an i-th image reference point corresponding to an i-th geographic reference point may be expressed as (*uᵢ,vᵢ*), wherein *uᵢ* represents an x coordinate value of the i-th image reference point and *vᵢ* represents a y coordinate value of the i-th image reference point.

In 430, the processing device 110 (e.g., the correction module 330, processor 220) may determine deviation information of the capture device based on the geographic position information corresponding to the at least two geographic reference points and image position information corresponding to the at least two geographic reference points.

As described in connection with FIG. 5, due to the installation error of the capture device, there may be a certain inclination between the capture device and the horizontal plane, so that the plane where the capture device is located may be an inclined plane that is inclined relative to the horizontal plane, which may lead to that an obtained installation angle of the capture device may have a certain deviation (which may be equivalent to a deviation between the inclined plane and the horizontal plane and/or the true north direction) relative to the horizontal plane. Accordingly, the deviation information of the capture device may reflect an installation deviation of the capture device with reference to the horizontal plane (or the horizontal line) and/or the true north direction.

In some embodiments, the deviation information may include at least one of an angular deviation or a translational deviation.

The translation deviation may refer to a translation amount of an installation position of the capture device relative to the geocentric coordinate system. For example, the translation deviation T can be expressed as $\left[\begin{matrix}{T}_{X} \\ {T}_{Y} \\ {T}_{Z}\end{matrix}\right]$, wherein *T_{X}, T_{Y},* and *T_{Z}* respectively represent a translation amount of the installation position of the capture device along X axis, Y axis, and Z axis in the geocentric coordinate system relative to the geocentric origin.

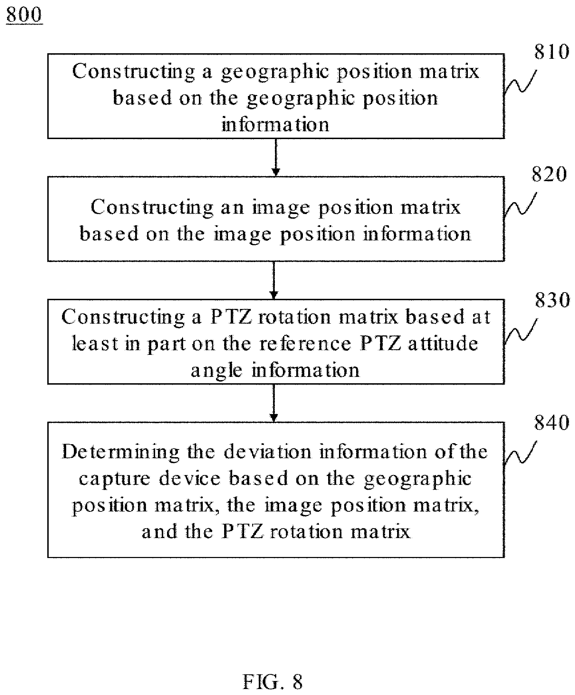

The angular deviation may refer to a deviation associated with an installation angle of the capture device. For example, the angular deviation may include a pitch angle error, a yaw angle error, a roll angle error, or the like, or a combination thereof. More descriptions of the angular deviation may be found elsewhere in the present disclosure, for example, FIG. 8 and the descriptions thereof.

In some embodiments, the processing device 110 may determine the deviation information of the capture device based on the geographic position information of the at least two geographic reference points, the image position information corresponding to the at least two geographic reference points, PTZ attitude information, etc. Specifically, the processing device 110 may determine the pitch angle error, the yaw angle error, and the roll angle error based on the geographic position information of the at least two geographic reference points, the image position information corresponding to the at least two geographic reference points, and the PTZ attitude information.

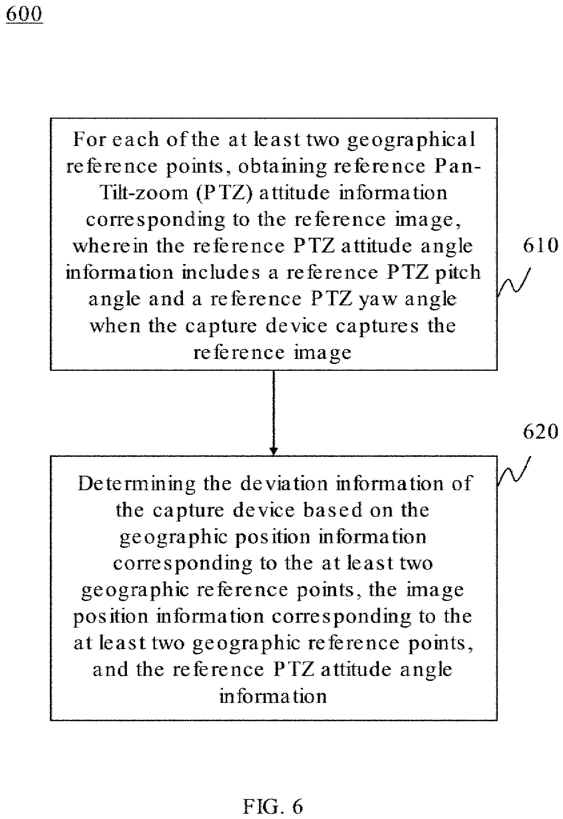

In some embodiments, for each geographic reference point, the processing device 110 may obtain reference PTZ attitude information corresponding to a reference image of the geographic reference point. Further, the processing device 110 may determine the deviation information of the capture device based on the geographic position information corresponding to the at least two geographic reference points, the image position information corresponding to the at least two geographic reference points, and the reference PTZ attitude information corresponding to the at least two geographic reference points. In some embodiments, the processing device 110 may determine the deviation information of the capture device based on the geographic position information, the image position information, and the reference PTZ attitude information according to a camera pinhole imaging model. More descriptions may be found elsewhere in the present disclosure, for example, FIG. 6, FIG. 8, and related descriptions thereof.

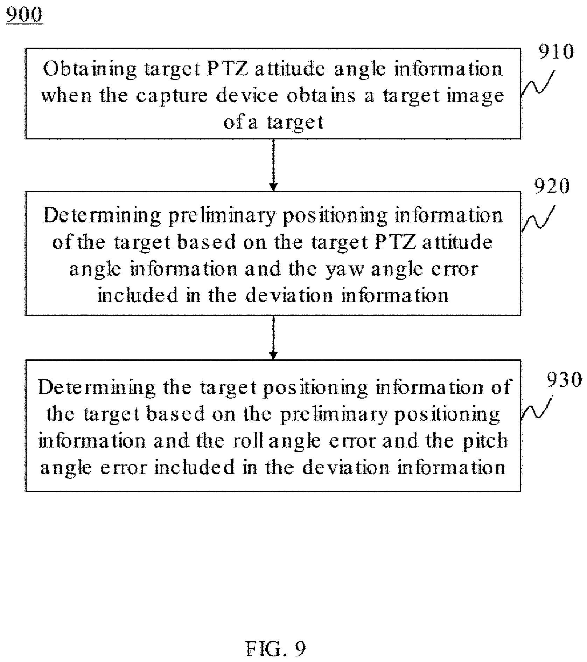

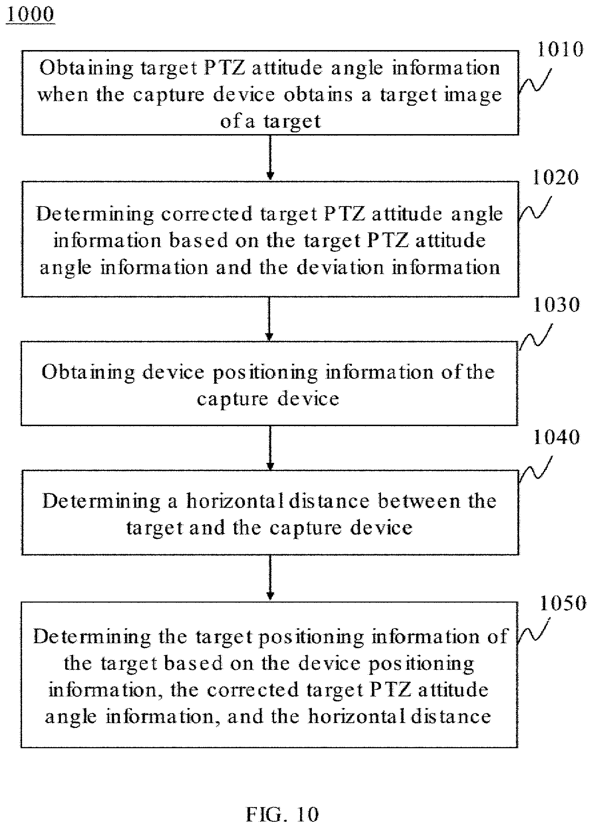

In some embodiments, the processing device 110 may determine target positioning information of a target based on the deviation information. More descriptions may be found elsewhere in the present disclosure, for example, FIG. 9, FIG. 10, and related descriptions thereof.

According to some embodiments of the present disclosure, at least two geographic reference points is selected and geographic position information and image position information of the at least two geographic reference points are determined. Accordingly, installation deviation information of the capture device can be accurately determined based on a correspondence between the geographic position information and the image position information, which can provide accurate and reliable data support for subsequent target positioning, thereby improving the positioning efficiency and accuracy.

It should be noted that the above description is merely provided for the purposes of illustration, and not intended to limit the scope of the present disclosure. For persons having ordinary skills in the art, plurality of variations or modifications may be made under the teachings of the present disclosure. However, those variations and modifications do not depart from the scope of the present disclosure. For example, one or more other optional operations (e.g., a storing operation) may be added elsewhere in the process 400. In the storing operation, the processing device 110 may store information and/or data (e.g., the deviation information) associated with positioning deviation correction in a storage device (e.g., the storage device 120) disclosed elsewhere in the present disclosure. In some embodiments, at least one geographic reference point is used for the purpose of correcting positioning deviation. The processing device 110 may obtain geographic position information and image information of the at least one geographic reference point, and determine deviation information of the capture device based on the geographic position information corresponding to the at least one geographic reference point and the image position information corresponding to the at least one geographic reference point.

FIG. 6 is a flowchart illustrating an exemplary process for determining deviation information of a capture device according to some embodiments of the present disclosure. In some embodiments, process 600 may be executed by the positioning deviation correction system 100. For example, the process 600 may be implemented as a set of instructions stored in the storage device (e.g., the storage device 120). In some embodiments, the processing device 110 (e.g., the processor 220 of the computing device 200 and/or one or more modules illustrated in FIG. 3) may execute the set of instructions and may accordingly be directed to perform the process 600. The operations of the illustrated process presented below are intended to be illustrative. In some embodiments, the process 600 may be accomplished with one or more additional operations not described and/or without one or more of the operations discussed. Additionally, the order of the operations of process 600 illustrated in FIG. 6 and described below is not intended to be limiting. In some embodiments, operation 430 may be performed based on process 600.

In 610, for each of the at least two geographic reference points, the processing device 110 (e.g., the correction module 330, processor 220) may obtain reference PTZ attitude information corresponding to a reference image of the geographic reference point.

In some embodiments, the reference PTZ attitude information may include a reference PTZ pitch angle and a reference PTZ yaw angle when the capture device captures the reference image.

The PTZ pitch angle may refer to an included angle between the PTZ body and the horizontal plane. The PTZ yaw angle may refer to an included angle of the actual direction of the PTZ on the vertical plane and the true north direction.

In some embodiments, the processing device 110 may record an angle (the PTZ pitch angle and the PTZ yaw angle) of the PTZ when the capture device performs a capture operation on the geographic reference point and accordingly obtain the reference PTZ attitude information. In some embodiments, the processing device 110 may determine theoretical PTZ attitude information when the capture device performs a capture operation on the geographic reference point based on device information (e.g., altitude information of the capture device relative to the ground, latitude and longitude information of an installation position of the capture device) of the capture device and a digital elevation model (DEM), and designate the theoretical PTZ attitude information as the reference PTZ attitude information.

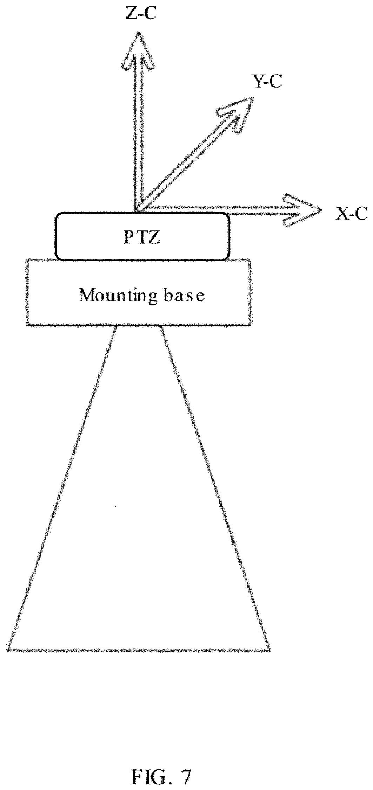

In some embodiments, the reference PTZ attitude information may be expressed as *R_{yuntai}* (*pitch_{yuntai},yaw_{yuntai}*), wherein *pitch_{yuntai}* represents the PTZ pitch angle and *yaw_{yuntai}* represents the PTZ yaw angle. Merely by way of example, as shown in FIG. 7, the processing device 110 may construct a PTZ coordinate system, wherein an X_C axis in the PTZ coordinate system represents a direction indicated by the PTZ pitch angle *pitch_{yuntai}* = 0, a Y_C axis indicates a direction indicated by the PTZ yaw angle *yaw_{yuntαi}* = 0, and a Z_C axis indicates a direction of a vertical line perpendicular to an installation plane of the PTZ. Accordingly, the processing device 110 may determine the reference PTZ attitude information *R_{yuntai}* based on the PTZ coordinate system.

In some embodiments, the processing device 110 may also obtain a field angle (e.g., a horizontal field angle, a vertical field angle) of the capture device, a resolution (e.g., a horizontal resolution, a vertical resolution) of the capture device, etc.

In 620, the processing device 110 (e.g., the correction module 330, the processor 220) may determine the deviation information of the capture device based on the geographic position information, the image position information, and the reference PTZ attitude information corresponding to at least two geographic reference points.

In some embodiments, the processing device 110 may determine the deviation information of the capture device based on the geographic position information, the image position information, and the reference PTZ attitude information corresponding to at least two geographic reference points according to a preset process. In some embodiments, the preset process may include a coordinate transformation, a matrix construction, a matrix solution, or the like, or a combination thereof.

In some embodiments, the processing device 110 may determine the deviation information of the capture device based on the geographic position information, the image position information, and the reference PTZ attitude information corresponding to at least two geographic reference points, and installation information (e.g., an installation position) of the capture device according to a digital elevation model (DEM).

In some embodiments, the processing device 110 may construct a geographic position matrix based on the geographic position information; construct an image position matrix based on the image position information; construct a PTZ rotation matrix based at least in part on the reference PTZ attitude information; and determine the deviation information of the capture device based on the geographic position matrix, the image position matrix, and the PTZ rotation matrix More descriptions may be found elsewhere in the present disclosure, for example, FIG. 8 and related descriptions thereof.

According to some embodiments of the present disclosure, the installation deviation information of the capture device may be determined based on the reference PTZ attitude information (e.g., a reference PTZ pitch angle, a reference PTZ yaw angle) when the capture device performs a capture operation on the at least two geographic reference points and the geographic position information and the image position information corresponding to the at least two geographic reference points, which can improve positioning efficiency and accuracy.

It should be noted that the above description is merely provided for the purposes of illustration, and not intended to limit the scope of the present disclosure. For persons having ordinary skills in the art, plurality of variations or modifications may be made under the teachings of the present disclosure. However, those variations and modifications do not depart from the scope of the present disclosure.

FIG. 8 is a flowchart illustrating an exemplary process for determining deviation information of a capture device according to other embodiments of the present disclosure. In some embodiments, process 800 may be executed by the positioning deviation correction system 100. For example, the process 800 may be implemented as a set of instructions stored in the storage device (e.g., the storage device 120). In some embodiments, the processing device 110 (e.g., the processor 220 of the computing device 200 and/or one or more modules illustrated in FIG. 3) may execute the set of instructions and may accordingly be directed to perform the process 800. The operations of the illustrated process presented below are intended to be illustrative. In some embodiments, the process 800 may be accomplished with one or more additional operations not described and/or without one or more of the operations discussed. Additionally, the order of the operations of process 800 illustrated in FIG. 8 and described below is not intended to be limiting. In some embodiments, operation 620 may be performed based on the process 800.

In 810, the processing device 110 (e.g., the correction module 330, the processor 220) may construct a geographic position matrix based on the geographic position information.

The geographic position matrix may refer to a collection of geographic position information of the geographic reference point(s). In some embodiments, the processing device 110 may construct a geographic position matrix with different coordinate axes as rows based on the geographic position information of the geographic reference point(s). In some embodiments, the processing device 110 may transform coordinates corresponding to the geographic position information into coordinates under the geocentric coordinate system, and then construct the geographic position matrix based on the coordinates under the geocentric coordinate system. For example, the processing device 110 may convert the coordinates of the geographic position information into coordinates under the geocentric coordinate system according to formula (1) and formula (2) below: $\left\{\begin{matrix}{X}_{E} = \left(N+H\right) \times cosB \times cosL \\ {Y}_{E} = \left(N+H\right) \times cosB \times cosL \\ {Z}_{E} = \left[N\left(1-{E}^{2}\right)+H\right] \times sinB\end{matrix}\right.$ $\left\{\begin{matrix}E = \frac{\sqrt{{a}^{2} - {b}^{2}}}{a} \\ N = \frac{a}{\sqrt{1 - {E}^{2} \times {sin}^{2} B}}\end{matrix}\right.$ where the geocentric coordinate system is a space Cartesian coordinate system established with the earth's barycenter as the origin, or a geodetic coordinate system established with the earth's ellipsoid (with a center coinciding with the earth's barycenter) as the reference plane; B represents latitude, L represents longitude, H represents height (a sum of an altitude of a position where a target is located and a height of the target); N represents a curvature radius of the ellipsoid, E represents a eccentricity of the ellipsoid; a represents the major axis radius of the earth; b represents the minor axis radius of the earth; and (*X_{E},Y_{E},Z_{E}*) represents a coordinate under the geocentric coordinate system.

Further, the geographic position matrix constructed based on the geographic position information may be expressed as below: $\left[\begin{matrix}{X}_{rp}^{i} \\ {Y}_{rp}^{i} \\ {Z}_{rp}^{i} \\ 1\end{matrix}\right]$ where ( ${X}_{rp}^{i} , {Y}_{rp}^{i} , {Z}_{rp}^{i}$) represents a coordinate of an i-th geographic reference point under the geocentric coordinate system.

In 820, the processing device 110 (e.g., the correction module 330, the processor 220) may construct an image position matrix based on the image position information.

The image position matrix may refer to a collection of the image position information. In some embodiments, the image position matrix constructed based on the image position information may be expressed as below: $\left[\begin{matrix}{u}_{i} \\ {v}_{i} \\ 1\end{matrix}\right]$ where *uᵢ* represents an x coordinate value of the i-th image reference point and *vᵢ* represents a y coordinate value of the i-th image reference point.

In 830, the processing device 110 (e.g., the correction module 330, the processor 220) may construct a PTZ rotation matrix based at least in part on the reference PTZ attitude information.

The PTZ rotation matrix may refer to a collection formed based on the PTZ attitude information. In some embodiments, the processing device 110 may convert the reference PTZ attitude information according to a trigonometric function relationship and construct the PTZ rotation matrix based on the converted reference PTZ attitude information. More detailed descriptions may be provided below.

In 840, the processing device 110 (e.g., the correction module 330, the processor 220) may determine the deviation information of the capture device based on the geographic position matrix, the image position matrix, and the PTZ rotation matrix.

In some embodiments, the deviation information may at least include an angular deviation (e.g., the yaw angle error, the roll angle error, the pitch angle error).

The pitch angle error may refer to an angle error of the PTZ deviating from the horizontal plane when the capture device is installed. For example, as shown in FIG. 7, the pitch angle error may refer to an angle between a direction (e.g., a central axis) of the PTZ after the PTZ is rotated around the X_C axis and the horizontal plane.

The yaw angle error may refer to a rotation angle error around a direction (gravity direction) vertical to the horizontal plane when the capture device is installed. For example, as shown in FIG. 7, the yaw angle error may refer to an included angle between a direction (e.g., a central axis) of the PTZ after the PTZ is rotated around the Z_C axis and the true north direction.

The roll angle error may refer to a rotation angle error around a central axis of the mounting base where the PTZ is installed when the capture device is installed. For example, as shown in FIG. 7, the roll angle error may refer to an angle between a direction (e.g., a central axis) of the PTZ and the horizontal plane after the capture device is installed and rotated around the Y_C axis.

In some embodiments, the processing device 110 may construct the PTZ rotation matrix based on the PTZ attitude information and a part (e.g., the yaw angle error) of the deviation information.

In some embodiments, the processing device 110 may construct the PTZ rotation matrix based on the PTZ attitude information and a yaw angle error included in the deviation information. For example, the processing device 110 may convert the PTZ attitude information and the yaw angle error according to a trigonometric function relationship and construct the PTZ rotation matrix based on the converted information thereof according to formula (5) below: $\begin{matrix}{R}_{yun} = \left[\begin{matrix}1 & 0 & 0 \\ 0 & cos \left({pitch}_{yuntai}\right) & - sin \left({pitch}_{yuntai}\right) \\ 0 & sin \left({pitch}_{yuntai}\right) & cos \left({pitch}_{yuntai}\right)\end{matrix}\right] ∗ \left[\begin{matrix}cos \left(yaw\right) & - sin \left(yaw\right) & 0 \\ sin \left(yaw\right) & cos \left(yaw\right) & 0 \\ 0 & 0 & 1\end{matrix}\right] ∗ \\ \left[\begin{matrix}cos \left({yaw}_{yuntai}\right) & - sin \left({yaw}_{yuntai}\right) & 0 \\ sin \left({yaw}_{yuntai}\right) & cos \left({yaw}_{yuntai}\right) & 0 \\ 0 & 0 & 1\end{matrix}\right]\end{matrix}$ where *R_{yun}* represents the PTZ rotation matrix, *pitch_{yuntai}* represents the PTZ pitch angle, *yaw_{yuntai}* represents the PTZ yaw angle, and *yaw* represents the yaw angle error in the deviation information.

In some embodiments, the processing device 110 may construct a deviation matrix corresponding to the deviation information. The deviation matrix may refer to a collection of the deviation information.

In some embodiments, the processing device 110 may convert the angular deviation in the deviation information according to a trigonometric function relationship and construct the deviation matrix based on the converted angular deviation. For example, the processing device 110 may construct the deviation matrix *R_{camera}* according to formula (6) below: ${R}_{camera} = \left[\begin{matrix}1 & 0 & 0 \\ 0 & cos \left(pitch\right) & - sin \left(pitch\right) \\ 0 & sin \left(pitch\right) & cos \left(pitch\right)\end{matrix}\right] ∗ \left[\begin{matrix}cos \left(roll\right) & 0 & sin \left(roll\right) \\ 0 & 1 & 0 \\ - sin \left(roll\right) & 0 & cos \left(roll\right)\end{matrix}\right]$ where *R_{cαmera}* represents the deviation matrix, pitch represents to the pitch angle error, roll represents the roll angle error.

In some embodiments, the processing device 110 may determine the deviation information based on the geographic position matrix, the image position matrix, the PTZ rotation matrix, and the deviation matrix.

In some embodiments, the processing device 110 may determine the deviation information of the capture device based on the geographic position matrix, the image position matrix, and the PTZ rotation matrix, in combination with device parameter(s) and/or installation position information (e.g., the translation deviation) of the capture device.

In some embodiments, the device parameter(s) of the capture device may include a focal length (e.g., a horizontal focal length, a vertical focal length) of the capture device, coordinates of a lens optical center, a scale factor used for calibration, or the like, or any combination thereof.

In some embodiments, the processing device 110 may obtain the horizontal focal length and the vertical focal length of the capture device directly from factory parameters. In some embodiments, the processing device 110 may obtain the horizontal focal length and the vertical focal length of the capture device based on the factory parameters. For example, the processing device 110 may obtain the horizontal focal length and the vertical focal length of the capture device according to formula (7) and formula (8) below: ${f}_{x} = \frac{{resolution}_{x}}{2} / tan \left({fov}_{x}/2\right)$ ${f}_{y} = \frac{{resolution}_{y}}{2} / tan \left({fov}_{y}/2\right)$ where *fₓ* represents a horizontal focal length of the capture device; *f_{y}* represents a vertical focal length of the capture device; *resolutionₓ* represents a horizontal resolution of the capture device; *resolution_{y}* represents a vertical resolution of the capture device.

In some embodiments, the processing device 110 may obtain the coordinates of the lens optical center based on a center point of an image captured by the capture device. For example, the processing device 110 may directly designate the center point of the image as the lens optical center. As another example, the processing device 110 may determine the coordinates of the lens optical center according to formula (9) and formula (10) below: ${u}_{0} = {resolution}_{x} / 2$ ${v}_{0} = {resolution}_{y} / 2$ where *u*₀ and *v*₀ represent the coordinates of the lens optical center.

In some embodiments, the processing device 110 may construct a device parameter matrix based on the device parameter(s) of the capture device. For example, the device parameter matrix may be expressed as below: $\left[\begin{matrix}{f}_{x} & 0 & {u}_{0} \\ 0 & {f}_{y} & {v}_{0} \\ 0 & 0 & 1\end{matrix}\right]$

In In some embodiments, the processing device 110 may construct a rotation matrix based on the PTZ rotation matrix and the deviation matrix. For example, the constructed rotation matrix may be expressed as below: $R = {R}_{yun} ∗ {R}_{camera}$ where R represents the rotation matrix.

In some embodiments, the processing device 110 may then construct an installation deviation matrix based on the rotation matrix and the translation deviation of the capture device. For example, the constructed installation deviation matrix may be expressed as below: $\left[\begin{matrix}R & T \\ 0 & 1\end{matrix}\right]$

Further, the processing device 110 may construct a camera pinhole imaging model based on the geographic position matrix, the image position matrix, the PTZ rotation matrix, the deviation matrix, the device parameter matrix, and the installation deviation matrix. Furthermore, the processing device 110 may solve the deviation information based on the camera pinhole imaging model.

In some embodiments, the processing device 110 may construct the camera pinhole imaging model according to formula (14) below: $s \left[\begin{matrix}{u}_{i} \\ {v}_{i} \\ 1\end{matrix}\right] = \left[\begin{matrix}{f}_{x} & 0 & {u}_{0} \\ 0 & {f}_{y} & {v}_{0} \\ 0 & 0 & 1\end{matrix}\right] \left[\begin{matrix}R & T \\ 0 & 1\end{matrix}\right] \left[\begin{matrix}{X}_{rp}^{i} \\ {Y}_{rp}^{i} \\ {Z}_{rp}^{i} \\ 1\end{matrix}\right]$ where s represents the scale factor which is a non-zero coefficient and can be removed by elimination during the solving process.

In the above pinhole imaging model, the yaw angle error, the pitch angle error, and the roll angle error in R and *T_{X}, T_{Y},* and *T_{Z}* in the translation deviation T are unknown (i.e., there are six unknown parameters or values). Accordingly, at least three geographic reference points are needed (accordingly, six solution equations can be constructed) to obtain the deviation information of the capture device.

In some embodiments, the processing device 110 may determine the translation deviation T based on the installation position information of the capture device. Accordingly, there are three unknown parameters or values in the above pinhole imaging model and at least two geographic reference points can achieve the solving of the deviation information.

In some embodiments, as described in connection with operation 430, the processing device 110 may convert the installation position (which may be obtained through a positioning device (e.g., the positioning device) provided with the capture device) of the capture device to coordinates under the geocentric coordinate system, designate the coordinates as the translation amounts (i.e., *T_{X}, T_{Y},* and *T_{Z}*) of the translation deviation, and accordingly determine the translation deviation.

In some cases, due to factors such as lens manufacturing errors or interface errors with the charge-coupled device (CCD), there may be an error associated with an actual optical center. Accordingly, the processing device 110 may correct the initial optical center coordinates.

In some embodiments, the processing device 110 may predict a deviation value and a deviation direction of the optical center through an optical center deviation prediction model, and correct the initial optical center coordinates based on the deviation value and the deviation direction. For example, the processing device 110 may correct the initial optical center coordinates according to formula (15) and formula (16) below: ${u}_{0}^{′} = {u}_{0} \pm a$ ${v}_{0}^{′} = {v}_{0} \pm b$ where ${u}_{0}^{′}$ and ${v}_{0}^{′}$ represent corrected coordinates of the lens optical center; a and b represent the deviation values; +a or +b means adding a or b to the initial coordinate (i.e., the deviation direction is negative); -a or -b means subtracting a or b from the initial coordinate (i.e., the deviation direction is positive).

In some embodiments, the optical center deviation prediction model may include a machine learning model, for example, a neural network model. For example, the neural network model may include a multi-layer perceptron (MLP) model, a deep neural network (DNN) model, a convolutional neural network (CNN) model, a deep convolutional encoder-decoder (DCED) network model, a generative adversarial network (GAN) model, or the like, or any combination thereof.

In some embodiments, the optical center deviation prediction model may be obtained through training based on a plurality of second training samples. In some embodiments, the second training sample may include sample initial optical center coordinates of multiple images captured by the capture device. A corresponding second label may include a deviation value and a deviation direction between actual optical center coordinates and the sample initial optical center coordinates.

In some embodiments, the optical center deviation prediction model may be trained iteratively until a termination condition is satisfied. In response to that the termination condition is satisfied, the optical center deviation prediction model may be finalized. In some embodiments, the termination condition may relate to a value of a loss function. For example, the termination condition may be deemed satisfied if the value of the loss function is minimal or smaller than a predetermined threshold. As another example, the termination condition may be deemed satisfied if the value of the loss function converges. In some embodiments, "convergence" may refer to that the variation of the values of the loss function in two or more consecutive iterations is equal to or smaller than a predetermined threshold. In some embodiments, "convergence" may refer to that a difference between the value of the loss function and a target value is equal to or smaller than a predetermined threshold. In some embodiments, the termination condition may be deemed satisfied when a specified count of iterations have been performed in the training process.

According to some embodiments of the present disclosure, a solution model is established to solve the deviation information by using the geographic position information and the image position information of the geographic reference points, the installation information of the capture device, the reference PTZ attitude information, and the device information of the capture device. Accordingly, various spatial position and angle information of the capture device are used, which can provide data basis for subsequent target positioning process and improve the positioning efficiency and accuracy.

It should be noted that the above description is merely provided for the purposes of illustration, and not intended to limit the scope of the present disclosure. For persons having ordinary skills in the art, plurality of variations or modifications may be made under the teachings of the present disclosure. However, those variations and modifications do not depart from the scope of the present disclosure.

FIG. 9 is a flowchart illustrating an exemplary process for determining target positioning information of a target according to some embodiments of the present disclosure. In some embodiments, process 900 may be executed by the positioning deviation correction system 100. For example, the process 900 may be implemented as a set of instructions stored in the storage device (e.g., the storage device 120). In some embodiments, the processing device 110 (e.g., the processor 220 of the computing device 200 and/or one or more modules illustrated in FIG. 3) may execute the set of instructions and may accordingly be directed to perform the process 900. The operations of the illustrated process presented below are intended to be illustrative. In some embodiments, the process 900 may be accomplished with one or more additional operations not described and/or without one or more of the operations discussed. Additionally, the order of the operations of process 900 illustrated in FIG. 9 and described below is not intended to be limiting.

In some embodiments, when a target monitoring scene is being monitored, the capture device may capture image(s) of the target monitoring scene and the captured image(s) may be analyzed to determine whether there is a target (e.g., a fire point) of interest. After it is determined that there is a target of interest in the target scene, preliminary positioning information of the target may be determined; then the deviation information may be used to correct the preliminary positioning information to obtain target positioning information, which can improve the positioning accuracy.

In 910, the processing device 110 (e.g., the correction module 330, the processor 220) may obtain target PTZ attitude information when the capture device captures a target image of a target.

The target may refer to an object that needs to be monitored and/or located. For example, the target may be a position (e.g., a fire point) in a forest. As another example, the target may be a suspect or a missing person.

The target PTZ attitude information may refer to PTZ attitude information when the capture device performs a capture operation on the target. In some embodiments, the target PTZ attitude information may include a target PTZ yaw angle and a target PTZ pitch angle.

In some embodiments, the processing device 110 may record an angle (e.g., the PTZ pitch angle and the PTZ yaw angle) of the PTZ when the capture device performs a capture operation on the target and accordingly obtain the target PTZ attitude information. In some embodiments, the target PTZ attitude information may be expressed as *R_{YT}* (*pitch_{YT}, yaw_{YT}*), wherein *pitch_{YT}* represents the target PTZ pitch angle and *yaw_{YT}* represents the target PTZ yaw angle.

In 920, the processing device 110 (e.g., the correction module 330, the processor 220) may determine preliminary positioning information of the target based on the target PTZ attitude information and the yaw angle error included in the deviation information.

In some embodiments, the processing device 110 may determine compensated target PTZ attitude information based on the yaw angle error. For example, the processing device 110 may determine a compensated target PTZ yaw angle according to formula (17) below: ${yaw}_{YT}^{′} = {yaw}_{YT} + yaw$ where ${yaw}_{YT}^{′}$ represents the compensated target PTZ yaw angle, *yaw_{YT}* represents the target PTZ yaw angle (also referred to as an initial target PTZ yaw angle), and yaw represents the yaw angle error.

Further, the processing device 110 may determine the preliminary positioning information of the target based on the compensated target PTZ attitude information. In some embodiments, the processing device 110 may determine the preliminary positioning information of the target based on the device positioning information, the compensated target PTZ attitude information, and a horizontal distance between a position of the capture device and a position of the target.

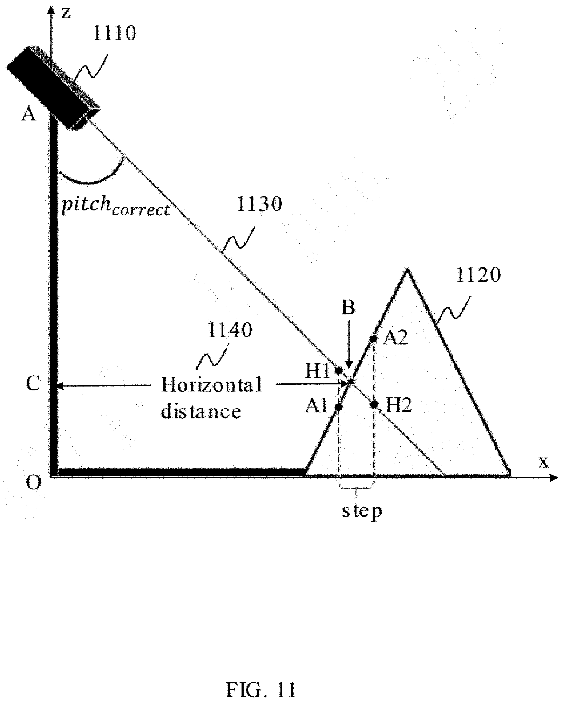

Merely by way of example, the processing device 110 may determine a ray based on a position A (e.g., an installation position) of the capture device, the target PTZ pitch angle, and the compensated target PTZ yaw angle. Further, for a triangle ABC formed by the position A of the capture device, a position B of the target, and a point C (which is an intersection of the horizontal distance between the capture device and the target and the z-axis as shown in FIG. 11), the processing device 110 may determine a degree of LABC based on a degree of ∠BAC (e.g., the target PTZ pitch angle) and ∠ACB (which is 90° ). Furthermore, for the triangle ABC, a length of side BC is equal to the horizontal distance, a length of side AC is a vertical distance between the capture device and the target. Accordingly, the processing device 110 may determine the preliminary positioning information of the target (e.g., coordinates of the position B) based on the degree of ∠ABC and the horizontal distance.

In some embodiments, the preliminary positioning information may include longitude information, latitude information, and altitude information. For example, the preliminary positioning information may be expressed as (*long_{target,} lat_{target}, alti_{target}*).

In 930, the processing device 110 (e.g., the correction module 330, the processor 220) may determine target positioning information of the target based on the preliminary positioning information and the roll angle error and the pitch angle error included in the deviation information.

In some embodiments, the processing device 110 may perform a coordinate transformation operation on the preliminary positioning information; obtain corrected positioning information by correcting the transformed preliminary positioning information based on the roll angle error and the pitch angle error; and obtain the target positioning information of the target by performing an inverse transformation operation on the corrected positioning information.

In some embodiments, the processing device 110 may perform the transformation operation on the preliminary positioning information to convert the preliminary positioning information into transformed preliminary positioning information under the geocentric coordinate system.

Further, the processing device 110 may determine a target deviation matrix (e.g., according to formula (6)) based on the roll angle error and the pitch angle error, and determine the corrected positioning information by correcting the transformed preliminary positioning information based on the target deviation matrix. For example, the processing device 110 may determine the corrected positioning information according to formula (18) below: $\left[\begin{matrix}X \\ Y \\ Z\end{matrix}\right] = R {′}_{camera} ∗ \left[\begin{matrix}{X}_{target} \\ {Y}_{target} \\ {Z}_{target}\end{matrix}\right]$ where *R'_{camera}* represents the target deviation matrix; $\left[\begin{matrix}{X}_{target} \\ {Y}_{target} \\ {Z}_{target}\end{matrix}\right]$ represents the transformed preliminary positioning information; and $\left[\begin{matrix}X \\ Y \\ Z\end{matrix}\right]$ represents the corrected positioning information.

Furthermore, the processing device 110 may perform an inverse transformation operation on the corrected positioning information to determine the target positioning information. As used herein, the "inverse transformation operation" refers to transforming the corrected positioning information to corresponding information (i.e., the target positioning information) expressed in longitude-latitude-altitude manner.

According to some embodiments of the present disclosure, the deviation information (e.g., the yaw angle error, the roll angle error, the pitch angle error) of the capture device is used to correct the preliminary positioning information of the target to determine accurate target positioning information. Since as long as the installation position of the PTZ is fixed, an angle compensation relationship is fixed, the deviation information can be used to correct the positioning information of the target no matter the capture device is slightly tilted in any direction, thereby improving the positioning accuracy and efficiency.

It should be noted that the above description is merely provided for the purposes of illustration, and not intended to limit the scope of the present disclosure. For persons having ordinary skills in the art, plurality of variations or modifications may be made under the teachings of the present disclosure. However, those variations and modifications do not depart from the scope of the present disclosure.

FIG. 10 is a flowchart illustrating an exemplary process for determining target positioning information of a target according to other embodiments of the present disclosure. In some embodiments, process 1000 may be executed by the positioning deviation correction system 100. For example, the process 1000 may be implemented as a set of instructions stored in the storage device (e.g., the storage device 120). In some embodiments, the processing device 110 (e.g., the processor 220 of the computing device 200 and/or one or more modules illustrated in FIG. 3) may execute the set of instructions and may accordingly be directed to perform the process 1000. The operations of the illustrated process presented below are intended to be illustrative. In some embodiments, the process 1000 may be accomplished with one or more additional operations not described and/or without one or more of the operations discussed. Additionally, the order of the operations of process 1000 illustrated in FIG. 10 and described below is not intended to be limiting.

In 1010, the processing device 110 (e.g., the correction module 330, the processor 220) may obtain target PTZ attitude information when the capture device captures a target image of the target. More descriptions may be found in operation 910 and the descriptions thereof are not repeated here.

In 1020, the processing device 110 (e.g., the correction module 330, the processor 220) may determine corrected target PTZ attitude information based on the target PTZ attitude information and the deviation information.

In some embodiments, the processing device 110 may correct the target PTZ yaw angle in the target PTZ attitude information based on the yaw angle error in the deviation information according to formula (19) below: ${yaw}_{correct} = {yaw}_{YT} + yaw$ where *yaw_{correct}* represents the corrected target PTZ yaw angle; *yaw_{YT}* represents the target PTZ yaw angle in the target PTZ attitude information, and *yaw* represents the yaw angle error in the deviation information.

In some embodiments, the processing device 110 may correct the target PTZ pitch angle in the target PTZ attitude information based on the pitch angle error in the deviation information according to formula (20) below: ${pitch}_{correct} = {pitch}_{YT} + pitch$ where *pitch_{correct}* represents the corrected target PTZ pitch angle in the target PTZ attitude angle information, *pitch_{YT}* represents the target PTZ pitch angle, pitch represents the pitch angle error in the deviation information.

In 1030, the processing device 110 (e.g., the correction module 330, processor 220) may obtain device positioning information of the capture device.

In some embodiments, the processing device 110 may obtain the device positioning information of the capture device through the positioning device 150 (e.g., a handheld locating device, a handheld locator, a mobile device). For example, after the installation of the capture device is completed, the processing device 110 may obtain the device positioning information of the capture device through the positioning device 150 provided with the capture device. In some embodiments, the device positioning information of the capture device may include longitude information, latitude information, and altitude information of a position (e.g., an installation position) of the capture device, wherein the altitude information is a sum of an altitude of a position where the capture device is located and a height of the capture device.

In 1040, the processing device 110 (e.g., the calibration module 330, the processor 220) may determine a horizontal distance between the target and the capture device.

The horizontal distance may refer to a horizontal distance (e.g., a horizontal distance 1140 illustrated in FIG. 11) between a position of the capture device and a position of the target. In some embodiments, the processing device 110 may establish a three-dimensional rectangular coordinate system of a space where the capture device is installed. For example, as shown in FIG. 11, for the coordinate system, a z axis is a direction along an altitude direction of the capture device from bottom to top, an x axis is a direction along a horizontal direction from the position of the capture device to the position of the target, an origin O is an intersection of the z axis and the x axis, and a y axis is not shown. Further, the processing device 110 may determine the horizontal distance between the target and the capture device based on the three-dimensional rectangular coordinate system.

In some embodiments, as illustrated in FIG. 11, a calculation process or a determination process may be performed by moving along the horizontal direction (e.g., the x-axis direction illustrated in FIG. 11) from the origin O according to a preset step length and stop moving until a preset condition is met. Accordingly, an intersection (i.e., a position of the target) of a ray 1130 starting from the optical center of the capture device 1110 to the target and a three-dimensional area (e.g., a mountain 1120) where the target is located can be determined.

In some embodiments, the preset step length may be set manually or may be a default value of the positioning deviation correction system 100, for example, the preset step length may be 1 meter, 2 meters, 3 meters, etc. The smaller the step length is, the higher the positioning accuracy may be.

In some embodiments, the preset condition may include (*H*1 - *A*1) * (*H2* - A2) < 0. As used herein, A1 and A2 respectively represent altitudes of mountain positions at two ends of the preset step when the moving process reaches the position of the mountain 1120; H 1 and H 2 respectively represent altitudes of ray points at the two ends of the preset step when the moving process reaches the position of the mountain 1120.

In some embodiments, when the preset condition is satisfied, the processing device 110 may determine the horizontal distance based on the preset step size and a number count of moving steps. For example, the processing device 110 may determine the horizontal distance 1140 by multiplying the preset step size by the number count of moving steps.

In 1050, the processing device 110 (e.g., the correction module 330, the processor 220) may determine the target positioning information of the target based on the device positioning information, the corrected target PTZ attitude information, and the horizontal distance.

Merely by way of example, as shown in FIG. 11, the processing device 110 may determine the ray 1130 based on a position A (e.g., an installation position) of the capture device, the corrected target PTZ pitch angle, and the corrected target PTZ yaw angle. Further, for a triangle ABC formed by the position A of the capture device, a position B of the target, and a point C (which is an intersection of the horizontal distance 1140 between the capture device and the target and the z-axis), the processing device 110 may determine a degree of ∠ABC based on a degree of ∠BAC (e.g., the corrected target PTZ pitch angle) and ∠ACB (which is 90° ). Furthermore, for the triangle ABC, a length of side BC is equal to the horizontal distance 1140, a length of side AC is a vertical distance between the capture device and the target. Accordingly, the processing device 110 may determine coordinates of the position B of the target based on the degree of ∠ABC and the horizontal distance 1140.

According to some embodiments of the present disclosure, a horizontal distance between the capture device and the target may be determined based on a preset step length, and then target positioning information of the target may be determined by combining the corrected target PTZ attitude information and the device positioning information of the capture device, which can effectively solve a problem of locating the target difficultly when the capture device is a monocular camera and improve the positioning accuracy.

It should be noted that the above description is merely provided for the purposes of illustration, and not intended to limit the scope of the present disclosure. For persons having ordinary skills in the art, plurality of variations or modifications may be made under the teachings of the present disclosure. However, those variations and modifications do not depart from the scope of the present disclosure.

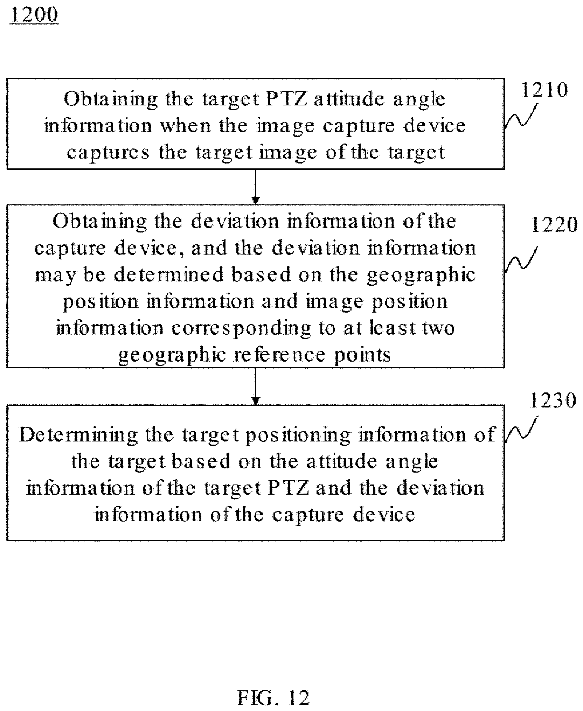

FIG. 12 is a flowchart illustrating an exemplary process for determining target positioning information of a target according to some embodiments of the present disclosure. In some embodiments, process 1200 may be executed by the positioning deviation correction system 100. For example, the process 1200 may be implemented as a set of instructions stored in the storage device (e.g., the storage device 120). In some embodiments, the processing device 110 (e.g., the processor 220 of the computing device 200 and/or one or more modules illustrated in FIG. 3) may execute the set of instructions and may accordingly be directed to perform the process 1200. The operations of the illustrated process presented below are intended to be illustrative. In some embodiments, the process 1200 may be accomplished with one or more additional operations not described and/or without one or more of the operations discussed. Additionally, the order of the operations of process 1200 illustrated in FIG. 12 and described below is not intended to be limiting.

In 1210, the processing device 110 (e.g., the processor 220) may obtain target PTZ attitude information when the capture device captures a target image of a target. More descriptions may be found in operation 910 and the descriptions thereof are not repeated here.

In 1220, the processing device 110 (e.g., the processor 220) may obtain deviation information of the capture device. In some embodiments, the deviation information may be determined based on geographic position information and image position information corresponding to at least two geographic reference points. More descriptions may be found elsewhere in the present disclosure (e.g., FIGs. 4-8 and the descriptions thereof) and the descriptions are not repeated here.

In 1230, the processing device 110 (e.g., the processor 220) may determine target positioning information of the target based on target PTZ attitude information and the deviation information of the capture device. More descriptions may be found elsewhere in the present disclosure (e.g., FIG.9, FIG. 10, and the descriptions thereof) and the descriptions are not repeated here.

It should be noted that the above description is merely provided for the purposes of illustration, and not intended to limit the scope of the present disclosure. For persons having ordinary skills in the art, plurality of variations or modifications may be made under the teachings of the present disclosure. However, those variations and modifications do not depart from the scope of the present disclosure.

Some embodiments of the present disclosure provide a system for correcting positioning deviation. The system may include at least one storage device for storing instructions and at least one processing device connected to the at least one storage device. When executing the instructions, the at least one processing device may implement the process or method (e.g., process 400, process 600, process 800, process 900, process 1000, process 1200) disclosed elsewhere in the present disclosure.

Some embodiments of the present disclosure provide a non-transitory computer-readable storage medium. The storage medium stores computer instructions. When a computer reads the computer instructions in the storage medium, the computer may execute the process or method (e.g., process 400, process 600, process 800, process 900, process 1000, process 1200) disclosed elsewhere in the present disclosure.

Having thus described the basic concepts, it may be rather apparent to those skilled in the art after reading this detailed disclosure that the foregoing detailed disclosure is intended to be presented by way of example only and is not limiting. Various alterations, improvements, and modifications may occur and are intended to those skilled in the art, though not expressly stated herein. These alterations, improvements, and modifications are intended to be suggested by this disclosure and are within the spirit and scope of the exemplary embodiments of this disclosure.

Moreover, certain terminology has been used to describe embodiments of the present disclosure. For example, the terms "one embodiment," "an embodiment," and/or "some embodiments" mean that a particular feature, structure or characteristic described in connection with the embodiment is included in at least one embodiment of the present disclosure. Therefore, it is emphasized and should be appreciated that two or more references to "an embodiment" or "one embodiment" or "an alternative embodiment" in various portions of the present disclosure are not necessarily all referring to the same embodiment. Furthermore, the particular features, structures or characteristics may be combined as suitable in one or more embodiments of the present disclosure.

Further, it will be appreciated by one skilled in the art, aspects of the present disclosure may be illustrated and described herein in any of a number of patentable classes or context including any new and useful process, machine, manufacture, or composition of matter, or any new and useful improvement thereof. Accordingly, aspects of the present disclosure may be implemented entirely hardware, entirely software (including firmware, resident software, micro-code, etc.) or combining software and hardware implementation that may all generally be referred to herein as a "unit," "module," or "system." Furthermore, aspects of the present disclosure may take the form of a computer program product embodied in one or more computer-readable media having computer-readable program code embodied thereon.

A non-transitory computer-readable signal medium may include a propagated data signal with computer readable program code embodied therein, for example, in baseband or as part of a carrier wave. Such a propagated signal may take any of a variety of forms, including electro-magnetic, optical, or the like, or any suitable combination thereof. A computer-readable signal medium may be any computer-readable medium that is not a computer-readable storage medium and that may communicate, propagate, or transport a program for use by or in connection with an instruction execution system, apparatus, or device. Program code embodied on a computer-readable signal medium may be transmitted using any appropriate medium, including wireless, wireline, optical fiber cable, RF, or the like, or any suitable combination of the foregoing.

Computer program code for carrying out operations for aspects of the present disclosure may be written in any combination of one or more programming languages, including an object-oriented programming language such as Java, Scala, Smalltalk, Eiffel, JADE, Emerald, C++, C#, VB. NET, Python or the like, conventional procedural programming languages, such as the "C" programming language, Visual Basic, Fortran 2003, Perl, COBOL 2002, PHP, ABAP, dynamic programming languages such as Python, Ruby, and Groovy, or other programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (e.g., through the Internet using an Internet Service Provider) or in a cloud computing environment or offered as a service such as a Software as a Service (SaaS).

The invention is defined by the appended claims.

Similarly, it should be appreciated that in the foregoing description of embodiments of the present disclosure, various features are sometimes grouped together in a single embodiment, figure, or description thereof for the purpose of streamlining the disclosure aiding in the understanding of one or more of the various inventive embodiments. This method of disclosure, however, is not to be interpreted as reflecting an intention that the claimed subject matter requires more features than are expressly recited in each claim. Rather, inventive embodiments lie in less than all features of a single foregoing disclosed embodiment.

In some embodiments, the numbers expressing quantities, properties, and so forth, used to describe and claim certain embodiments of the application are to be understood as being modified in some instances by the term "about," "approximate," or "substantially." For example, "about," "approximate," or "substantially" may indicate ±20% variation of the value it describes, unless otherwise stated. Accordingly, in some embodiments, the numerical parameters set forth in the written description and attached claims are approximations that may vary depending upon the desired properties sought to be obtained by a particular embodiment. In some embodiments, the numerical parameters should be construed in light of the number of reported significant digits and by applying ordinary rounding techniques. Notwithstanding that the numerical ranges and parameters setting forth the broad scope of some embodiments of the application are approximations, the numerical values set forth in the specific examples are reported as precisely as practicable.

In closing, it is to be understood that the embodiments of the application disclosed herein are illustrative of the principles of the embodiments of the application. Other modifications that may be employed may be within the scope of the application. Thus, by way of example, but not of limitation, alternative configurations of the embodiments of the application may be utilized in accordance with the teachings herein. The invention is defined by the appended claims.

## Claims

1. A method for correcting positioning deviation implemented on a computing device, comprising:
obtaining geographic position information of at least two geographic reference points;
for each of the at least two geographic reference points, obtaining a reference image of the geographic reference point collected by a capture device by controlling a Pan-Tilt-Zoom (PTZ) of the capture device to rotate to a specific position, wherein the reference image includes image position information of an image reference point corresponding to the geographic reference point, and the image reference point corresponding to the geographic reference point is located at a center of a capture view of the capture device; and
determining deviation information of the capture device based on the geographic position information and the image position information corresponding to the at least two geographic reference points, including:
for each of the at least two geographic reference points, obtaining reference PTZ attitude information corresponding to the reference image, wherein the reference PTZ attitude information includes a reference PTZ pitch angle and a reference PTZ yaw angle when the capture device captures the reference image; and
determining the deviation information of the capture device based on the geographic position information corresponding to the at least two geographic reference points, the image position information corresponding to the at least two geographic reference points, and the reference PTZ attitude information corresponding to the at least two geographic reference points.

2. The method of claim 1, wherein when the capture device captures the reference image of the geographic reference point, the image reference point corresponding to the geographic reference point is located at a center of a capture view of the capture device.

3. The method of claim 1 or 2, wherein the deviation information includes at least one of an angular deviation or a translational deviation.

4. The method of claim 1, wherein the determining the deviation information of the capture device based on the geographic position information corresponding to the at least two geographic reference points and the image position information, and the reference PTZ attitude information includes:
constructing a geographic position matrix based on the geographic position information;
constructing an image position matrix based on the image position information;
constructing a PTZ rotation matrix based at least in part on the reference PTZ attitude information; and
determining the deviation information of the capture device based on the geographic position matrix, the image position matrix, and the PTZ rotation matrix.

5. The method of claim 4, the determining the deviation information of the capture device based on the geographic position matrix, the image position matrix, and the PTZ rotation matrix comprises:
constructing the PTZ rotation matrix based on the reference PTZ attitude information and a yaw angle error included in the deviation information;
constructing a deviation matrix corresponding to the deviation information; and
solving the deviation information based on the geographic position matrix, the image position matrix, the PTZ rotation matrix, and the deviation matrix, wherein the deviation information at least includes a yaw angle error, a roll angle error, and a pitch angle error.

6. The method of any one of claims 1-5, further comprising:
obtaining target PTZ attitude information of the capture device when the capture device performs a capture operation on a target; and
determining target positioning information of the target based on the target PTZ attitude information and the deviation information of the capture device, including:
determining corrected target PTZ attitude information based on the target PTZ attitude information and the deviation information;
obtaining device positioning information of the capture device;
determining a horizontal distance between the target and the capture device; wherein the horizontal distance is determined based on a three-dimensional rectangular coordinate system of a space where the capture device is installed, for the coordinate system, a z axis is a direction along an altitude direction of the capture device from bottom to top, an x axis is a direction along a horizontal direction from the position of the capture device to the position of the target; and
determining the target positioning information of the target based on the device positioning information, the corrected target **PTZ** attitude information, and the horizontal distance.

7. A system for correcting positioning deviation implemented on a computing device, comprising:
at least one storage device storing instructions;
at least one processing device in communication with the at least one storage device, wherein when executing the instructions, the at least one processing device is configured to perform operations including:
obtaining geographic position information of at least two geographic reference points;
for each of the at least two geographic reference points, obtaining a reference image of the geographic reference point collected by a capture device by controlling a Pan-Tilt-Zoom (PTZ) of the capture device to rotate to a specific position, wherein the reference image includes image position information of an image reference point corresponding to the geographic reference point and the image reference point corresponding to the geographic reference point is located at a center of the capture view of the capture device; and
determine deviation information of the capture device based on the geographic position information and the image position information corresponding to the at least two geographic reference points, including:
for each of the at least two geographic reference points, obtaining reference PTZ attitude information corresponding to the reference image, wherein the reference PTZ attitude information includes a reference PTZ pitch angle and a reference PTZ yaw angle when the capture device captures the reference image; and
determining the deviation information of the capture device based on the geographic position information corresponding to the at least two geographic reference points, the image position information corresponding to the at least two geographic reference points, and the reference PTZ attitude information corresponding to the at least two geographic reference points.

8. The system of claim 7, wherein when the capture device captures the reference image of the geographic reference point, the image reference point corresponding to the geographic reference point is located at a center of a capture view of the capture device.

9. The system of any one of claims 7-8, wherein the at least one processing device is further configured to perform operations including:
obtaining target PTZ attitude information of the capture device when the capture device performs a capture operation on a target; and
determining target positioning information of the target based on the target PTZ attitude information and the deviation information of the capture device, includes:
determining corrected target PTZ attitude information based on the target PTZ attitude information and the deviation information;
obtaining device positioning information of the capture device;
determining a horizontal distance between the target and the capture device; wherein the horizontal distance is determined based on a three-dimensional rectangular coordinate system of a space where the capture device is installed, for the coordinate system, a z axis is a direction along an altitude direction of the capture device from bottom to top, an x axis is a direction along a horizontal direction from the position of the capture device to the position of the target; and
determining the target positioning information of the target based on the device positioning information, the corrected target PTZ attitude information, and the horizontal distance.

10. A non-transitory computer-readable storage medium, the storage medium storing computer instructions, wherein when the computer reads the computer instructions, the computer executes a method for correcting positioning deviation, the method comprising:
obtaining geographic position information of at least two geographic reference points;
for each of the at least two geographic reference points, obtaining a reference image of the geographic reference point collected by a capture device by controlling a Pan-Tilt-Zoom (PTZ) of the capture device to rotate to a specific position, wherein the reference image includes image position information of an image reference point corresponding to the geographic reference point, and the image reference point corresponding to the geographic reference point is located at a center of a capture view of the capture device; and
determining deviation information of the capture device based on the geographic position information and the image position information corresponding to the at least two geographic reference points, including:
for each of the at least two geographic reference points, obtaining reference PTZ attitude information corresponding to the reference image, wherein the reference PTZ attitude information includes a reference PTZ pitch angle and a reference PTZ yaw angle when the capture device captures the reference image; and
determining the deviation information of the capture device based on the geographic position information corresponding to the at least two geographic reference points, the image position information corresponding to the at least two geographic reference points, and the reference PTZ attitude information corresponding to the at least two geographic reference points.

11. The method of claim 4, wherein constructing the geographic position matrix with different coordinate axes as rows based on the geographic position information includes:
transforming coordinates corresponding to the geographic position information into coordinates under a geocentric coordinate system, and
constructing the geographic position matrix based on the coordinates under the geocentric coordinate system.

12. The method of claim 5, wherein constructing the PTZ rotation matrix based on the reference PTZ attitude information and a yaw angle error included in the deviation information includes:
converting the PTZ attitude information and the yaw angle error according to a trigonometric function relationship to obtain converted information; and
constructing the PTZ rotation matrix based on the converted information thereof according to formulas below: $\begin{matrix}{R}_{yun} = \left[\begin{matrix}1 & 0 & 0 \\ 0 & cos \left({pitch}_{yuntai}\right) & - sin \left({pitch}_{yuntai}\right) \\ 0 & sin \left({pitch}_{yuntai}\right) & cos \left({pitch}_{yuntai}\right)\end{matrix}\right] ∗ \left[\begin{matrix}cos \left(yaw\right) & - sin \left(yaw\right) & 0 \\ sin \left(yaw\right) & cos \left(yaw\right) & 0 \\ 0 & 0 & 1\end{matrix}\right] \\ ∗ \left[\begin{matrix}cos \left({yaw}_{yuntai}\right) & - sin \left({yaw}_{yuntai}\right) & 0 \\ sin \left({yaw}_{yuntai}\right) & cos \left({yaw}_{yuntai}\right) & 0 \\ 0 & 0 & 1\end{matrix}\right]\end{matrix}$ where *R_{yun}* represents the PTZ rotation matrix, *pitch_{yuntai}* represents a PTZ pitch angle, *yaw_{yuntai}* represents a PTZ yaw angle, and yaw represents the yaw angle error in the deviation information.

13. The method of claim 5, wherein
constructing a deviation matrix corresponding to the deviation information includes:
converting the angular deviation in the deviation information according to a trigonometric function relationship to obtain converted angular deviation; and constructing the deviation matrix based on the converted angular deviation.

## Patentansprüche

1. Verfahren zum Korrigieren einer Positionierungsabweichung, umgesetzt auf einer Rechenvorrichtung, umfassend:
Erhalten von geografischen Positionsinformationen mindestens zweier geografischer Referenzpunkte;
für jeden der mindestens zwei geografischen Referenzpunkten Erhalten eines Referenzbildes des geografischen Referenzpunkts, das durch eine Aufnahmevorrichtung erfasst wird, durch Steuern eines Schwenk-Neige-Zooms (PTZ) der Aufnahmevorrichtung, um sich zu einer spezifischen Position zu drehen, wobei das Referenzbild Bildpositionsinformationen eines Bildreferenzpunkts einschließt, der dem geografischen Referenzpunkt entspricht, und der dem geografischen Referenzpunkt entsprechende Bildreferenzpunkt sich bei einer Mitte einer Aufnahmeansicht der Aufnahmevorrichtung befindet; und
Bestimmen von Abweichungsinformationen der Aufnahmevorrichtung auf Grundlage der geografischen Positionsinformationen und der Bildpositionsinformationen, die den mindestens zwei geografischen Referenzpunkten entsprechen, einschließlich:
für jeden der mindestens zwei geografischen Referenzpunkten Erhalten von Referenz-PTZ-Lageinformationen, die dem Referenzbild entsprechen, wobei die Referenz-PTZ-Lageinformationen einen Referenz-PTZ-Nickwinkel und einen Referenz-PTZ-Gierwinkel, wenn die Aufnahmevorrichtung das Referenzbild aufnimmt, einschließen; und
Bestimmen der Abweichungsinformationen der Aufnahmevorrichtung auf Grundlage der geografischen Positionsinformationen, die den mindestens zwei geografischen Referenzpunkten entsprechen, der Bildpositionsinformationen, die den mindestens zwei geografischen Referenzpunkten entsprechen, und der Referenz-PTZ-Lageinformationen, die den mindestens zwei geografischen Referenzpunkten entsprechen.

2. Verfahren nach Anspruch 1, wobei, wenn die Aufnahmevorrichtung das Referenzbild des geografischen Referenzpunkts aufnimmt, sich der dem geographischen Referenzpunkt entsprechende Bildreferenzpunkt bei einer Mitte einer Aufnahmeansicht der Aufnahmevorrichtung befindet.

3. Verfahren nach Anspruch 1 oder 2, wobei die Abweichungsinformationen mindestens eines von einer Winkelabweichung oder einer Translationsabweichung einschließen.

4. Verfahren nach Anspruch 1, wobei das Bestimmen der Abweichungsinformationen der Aufnahmevorrichtung auf Grundlage der geografischen Positionsinformationen, die den mindestens zwei geografischen Referenzpunkten entsprechen, und der Bildpositionsinformationen und der Referenz-PTZ-Lageinformationen Folgendes einschließt:
Erstellen einer geografischen Positionsmatrix auf Grundlage der geografischen Positionsinformationen;
Erstellen einer Bildpositionsmatrix auf Grundlage der Bildpositionsinformationen;
Erstellen einer PTZ-Rotationsmatrix, die zumindest zum Teil auf den Referenz-PTZ-Lageinformationen beruht; und
Bestimmen der Abweichungsinformationen der Aufnahmevorrichtung auf Grundlage der geografischen Positionsmatrix, der Bildpositionsmatrix und der PTZ-Rotationsmatrix.

5. Verfahren nach Anspruch 4, wobei das Bestimmen der Abweichungsinformationen der Erfassungsvorrichtung auf Grundlage der geografischen Positionsmatrix, der Bildpositionsmatrix und der PTZ-Rotationsmatrix Folgendes umfasst:
Erstellen der PTZ-Rotationsmatrix auf Grundlage der Referenz-PTZ-Lageinformationen und eines in den Abweichungsinformationen eingeschlossenen Gierwinkelfehlers;
Erstellen einer Abweichungsmatrix entsprechend den Abweichungsinformationen; und Lösen der Abweichungsinformationen auf Grundlage der geografischen Positionsmatrix, der Bildpositionsmatrix, der PTZ-Rotationsmatrix und der Abweichungsmatrix, wobei die Abweichungsinformationen mindestens einen Gierwinkelfehler, einen Rollwinkelfehler und einen Nickwinkelfehler einschließen.

6. Verfahren nach einem der Ansprüche 1-5, weiter umfassend:
Erhalten von Ziel-PTZ-Lageinformationen der Aufnahmevorrichtung, wenn die Aufnahmevorrichtung einen Erfassungsvorgang an einem Ziel durchführt; und
Bestimmen von Zielpositionierungsinformationen des Ziels auf Grundlage der Ziel-PTZ-Lageinformationen und der Abweichungsinformationen der Aufnahmevorrichtung, einschließlich:
Bestimmen von korrigierten Ziel-PTZ-Lageinformationen auf Grundlage der Ziel-PTZ-Lageinformationen und der Abweichungsinformationen;
Erhalten von Vorrichtungspositionierungsinformationen der Aufnahmevorrichtung;
Bestimmen eines horizontalen Abstands zwischen dem Ziel und der Aufnahmevorrichtung; wobei der horizontale Abstand auf der Grundlage eines dreidimensionalen rechtwinkligen Koordinatensystems eines Raums bestimmt wird, in dem die Aufnahmevorrichtung installiert ist; eine z-Achse des Koordinatensystems eine Richtung entlang einer Höhenrichtung der Aufnahmevorrichtung von unten nach oben ist, eine x-Achse eine Richtung entlang einer horizontalen Richtung von der Position der Aufnahmevorrichtung zur Position des Ziels ist; und
Bestimmen der Zielpositionierungsinformationen des Ziels auf Grundlage der Vorrichtungspositionierungsinformationen, der korrigierten Ziel-PTZ-Lageinformationen und des horizontalen Abstands.

7. System zum Korrigieren einer Positionierungsabweichung, umgesetzt auf einer Rechenvorrichtung, umfassend:
mindestens eine Speichervorrichtung, die Anweisungen speichert;
mindestens eine Verarbeitungsvorrichtung in Kommunikation mit der mindestens einen Speichervorrichtung, wobei die mindestens eine Verarbeitungsvorrichtung, wenn sie die Anweisungen ausführt, dafür konfiguriert ist, Operationen durchzuführen, die Folgendes einschließen:
Erhalten von geografischen Positionsinformationen mindestens zweier geografischer Referenzpunkte;
für jeden der mindestens zwei geografischen Referenzpunkten Erhalten eines Referenzbildes des geografischen Referenzpunkts, das durch eine Aufnahmevorrichtung erfasst wird, durch Steuern eines Schwenk-Neige-Zooms (PTZ) der Aufnahmevorrichtung, um sich zu einer spezifischen Position zu drehen, wobei das Referenzbild Bildpositionsinformationen eines Bildreferenzpunkts einschließt, der dem geografischen Referenzpunkt entspricht, und der dem geografischen Referenzpunkt entsprechende Bildreferenzpunkt sich bei einer Mitte einer Aufnahmeansicht der Aufnahmevorrichtung befindet; und
Bestimmen von Abweichungsinformationen der Aufnahmevorrichtung auf Grundlage der geografischen Positionsinformationen und der Bildpositionsinformationen, die den mindestens zwei geografischen Referenzpunkten entsprechen, einschließlich:
für jeden der mindestens zwei geografischen Referenzpunkten Erhalten von Referenz-PTZ-Lageinformationen, die dem Referenzbild entsprechen, wobei die Referenz-PTZ-Lageinformationen einen Referenz-PTZ-Nickwinkel und einen Referenz-PTZ-Gierwinkel, wenn die Aufnahmevorrichtung das Referenzbild aufnimmt, einschließen; und
Bestimmen der Abweichungsinformationen der Aufnahmevorrichtung auf Grundlage der geografischen Positionsinformationen, die den mindestens zwei geografischen Referenzpunkten entsprechen, der Bildpositionsinformationen, die den mindestens zwei geografischen Referenzpunkten entsprechen, und der Referenz-PTZ-Lageinformationen, die den mindestens zwei geografischen Referenzpunkten entsprechen.

8. System nach Anspruch 7, wobei, wenn die Aufnahmevorrichtung das Referenzbild des geografischen Referenzpunkts aufnimmt, sich der dem geographischen Referenzpunkt entsprechende Bildreferenzpunkt bei einer Mitte einer Aufnahmeansicht der Aufnahmevorrichtung befindet.

9. System nach einem der Ansprüche 7-8, wobei die mindestens eine Verarbeitungsvorrichtung weiter dafür konfiguriert ist, Operationen durchzuführen, die Folgendes einschließen:
Erhalten von Ziel-PTZ-Lageinformationen der Aufnahmevorrichtung, wenn die Aufnahmevorrichtung einen Erfassungsvorgang an einem Ziel durchführt; und
Bestimmen von Zielpositionierungsinformationen des Ziels auf Grundlage der Ziel-PTZ-Lageinformationen und der Abweichungsinformationen der Aufnahmevorrichtung, einschließlich:
Bestimmen von korrigierten Ziel-PTZ-Lageinformationen auf Grundlage der Ziel-PTZ-Lageinformationen und der Abweichungsinformationen;
Erhalten von Vorrichtungspositionierungsinformationen der Aufnahmevorrichtung;
Bestimmen eines horizontalen Abstands zwischen dem Ziel und der Aufnahmevorrichtung; wobei der horizontale Abstand auf der Grundlage eines dreidimensionalen rechtwinkligen Koordinatensystems eines Raums bestimmt wird, in dem die Aufnahmevorrichtung installiert ist; eine z-Achse des Koordinatensystems eine Richtung entlang einer Höhenrichtung der Aufnahmevorrichtung von unten nach oben ist, eine x-Achse eine Richtung entlang einer horizontalen Richtung von der Position der Aufnahmevorrichtung zur Position des Ziels ist; und
Bestimmen der Zielpositionierungsinformationen des Ziels auf Grundlage der Vorrichtungspositionierungsinformationen, der korrigierten Ziel-PTZ-Lageinformationen und des horizontalen Abstands.

10. Nichtflüchtiges computerlesbares Speichermedium, wobei das Speichermedium Computeranweisungen speichert, wobei, wenn ein Computer die Computeranweisungen liest, der Computer ein Verfahren zum Korrigieren einer Positionierungsabweichung ausführt, wobei das Verfahren Folgendes umfasst:
Erhalten von geografischen Positionsinformationen mindestens zweier geografischer Referenzpunkte;
für jeden der mindestens zwei geografischen Referenzpunkten Erhalten eines Referenzbildes des geografischen Referenzpunkts, das durch eine Aufnahmevorrichtung erfasst wird, durch Steuern eines Schwenk-Neige-Zooms (PTZ) der Aufnahmevorrichtung, um sich zu einer spezifischen Position zu drehen, wobei das Referenzbild Bildpositionsinformationen eines Bildreferenzpunkts einschließt, der dem geografischen Referenzpunkt entspricht, und der dem geografischen Referenzpunkt entsprechende Bildreferenzpunkt sich bei einer Mitte einer Aufnahmeansicht der Aufnahmevorrichtung befindet; und
Bestimmen von Abweichungsinformationen der Aufnahmevorrichtung auf Grundlage der geografischen Positionsinformationen und der Bildpositionsinformationen, die den mindestens zwei geografischen Referenzpunkten entsprechen, einschließlich:
für jeden der mindestens zwei geografischen Referenzpunkten Erhalten von Referenz-PTZ-Lageinformationen, die dem Referenzbild entsprechen, wobei die Referenz-PTZ-Lageinformationen einen Referenz-PTZ-Nickwinkel und einen Referenz-PTZ-Gierwinkel, wenn die Aufnahmevorrichtung das Referenzbild aufnimmt, einschließen; und
Bestimmen der Abweichungsinformationen der Aufnahmevorrichtung auf Grundlage der geografischen Positionsinformationen, die den mindestens zwei geografischen Referenzpunkten entsprechen, der Bildpositionsinformationen, die den mindestens zwei geografischen Referenzpunkten entsprechen, und der Referenz-PTZ-Lageinformationen, die den mindestens zwei geografischen Referenzpunkten entsprechen.

11. Verfahren nach Anspruch 4, wobei das Erstellen der geografischen Positionsmatrix mit unterschiedlichen Koordinatenachsen als Zeilen auf der Grundlage der geografischen Positionsinformationen Folgendes einschließt:
Transformieren der den geografischen Positionsinformationen entsprechenden Koordinaten in Koordinaten unter einem geozentrischen Koordinatensystem und
Erstellen der geografischen Positionsmatrix auf Grundlage der Koordinaten unter dem geozentrischen Koordinatensystem.

12. Verfahren nach Anspruch 5, wobei das Erstellen der PTZ-Rotationsmatrix auf Grundlage der Referenz-PTZ-Lageinformationen und eines in den Abweichungsinformationen eingeschlossenen Gierwinkelfehlers Folgendes einschließt:
Umwandeln der PTZ-Lageinformationen und des Gierwinkelfehlers gemäß einer trigonometrischen Funktionsbeziehung, um umgewandelte Informationen zu erhalten; und
Erstellen der PTZ-Rotationsmatrix auf Grundlage der umgewandelten Informationen gemäß den folgenden Formeln: $\begin{matrix}{R}_{yun} = \left[\begin{matrix}1 & 0 & 0 \\ 0 & cos \left({pitch}_{yuntai}\right) & - sin \left({pitch}_{yuntai}\right) \\ 0 & sin \left({pitch}_{yuntai}\right) & cos \left({pitch}_{yuntai}\right)\end{matrix}\right] ∗ \left[\begin{matrix}cos \left(Gierwinkel\right) & - sin \left(Gierwinkel\right) & 0 \\ sin \left(Gierwinkel\right) & cos \left(Gierwinkel\right) & 0 \\ 0 & 0 & 1\end{matrix}\right] \\ ∗ \left[\begin{matrix}cos \left({yaw}_{yuntai}\right) & - sin \left({yaw}_{yuntai}\right) & 0 \\ sin \left({yaw}_{yuntai}\right) & cos \left({yaw}_{yuntai}\right) & 0 \\ 0 & 0 & 1\end{matrix}\right]\end{matrix}$
wobei *R_{yun}* die PTZ-Rotationsmatrix darstellt, *pitch_{yuntai}* einen PTZ-Nickwinkel darstellt, *yaw_{yuntαi}* einen PTZ-Gierwinkel darstellt und yaw den Gierwinkelfehler in den Abweichungsinformationen darstellt.

13. Verfahren nach Anspruch 5, wobei
das Erstellen einer Abweichungsmatrix, die den Abweichungsinformationen entspricht, Folgendes einschließt:
Umwandeln der Winkelabweichung in den Abweichungsinformationen gemäß einer trigonometrischen Funktionsbeziehung, um eine umgewandelte Winkelabweichung zu erhalten; und Erstellen der Abweichungsmatrix auf Grundlage der umgerechneten Winkelabweichung.

## Revendications

1. Procédé de correction d'écart de positionnement mis en œuvre sur un dispositif informatique, comprenant :
l'obtention d'informations de position géographique d'au moins deux points de référence géographiques ;
pour chacun des au moins deux points de référence géographiques, l'obtention d'une image de référence du point de référence géographique collectée par un dispositif de capture en commandant un mécanisme panoramique-inclinaison-zoom (PTZ) du dispositif de capture jusqu'à une position spécifique, dans lequel l'image de référence inclut des informations de position d'image d'un point de référence d'image correspondant au point de référence géographique, et le point de référence d'image correspondant au point de référence géographique est situé au centre d'une vue de capture du dispositif de capture ; et
la détermination d'informations d'écart du dispositif de capture sur la base des informations de position géographique et des informations de position d'image correspondant aux au moins deux points de référence géographiques, incluant :
pour chacun des au moins deux points de référence géographiques, l'obtention d'informations d'attitude PTZ de référence correspondant à l'image de référence, dans lequel les informations d'attitude PTZ de référence incluent un angle de tangage PTZ de référence et un angle de lacet PTZ de référence lorsque le dispositif de capture capture l'image de référence ; et
la détermination des informations d'écart du dispositif de capture sur la base des informations de position géographique correspondant aux au moins deux points de référence géographiques, des informations de position d'image correspondant aux au moins deux points de référence géographiques et des informations d'attitude PTZ de référence correspondant aux au moins deux points de référence géographiques.

2. Procédé selon la revendication 1, dans lequel, lorsque le dispositif de capture capture l'image de référence du point de référence géographique, le point de référence d'image correspondant au point de référence géographique est situé au centre d'une vue de capture du dispositif de capture.

3. Procédé selon la revendication 1 ou 2, dans lequel les informations d'écart incluent au moins l'un parmi un écart angulaire ou un écart de translation.

4. Procédé selon la revendication 1, dans lequel la détermination des informations d'écart du dispositif de capture, sur la base des informations de position géographique correspondant aux au moins deux points de référence géographiques et des informations de position d'image, et des informations d'attitude PTZ de référence inclut :
la construction d'une matrice de position géographique sur la base des informations de position géographique ;
la construction d'une matrice de position d'image sur la base des informations de position d'image ;
la construction d'une matrice de rotation PTZ sur la base au moins en partie des informations d'attitude PTZ de référence ; et
la détermination des informations d'écart du dispositif de capture sur la base de la matrice de position géographique, de la matrice de position d'image et de la matrice de rotation PTZ.

5. Procédé selon la revendication 4, la détermination des informations d'écart du dispositif de capture
sur la base de la matrice de position géographique, de la matrice de position d'image et de la matrice de rotation PTZ comprend :
la construction de la matrice de rotation PTZ sur la base des informations d'attitude PTZ de référence et d'une erreur d'angle de lacet incluse dans les informations d'écart ;
la construction d'une matrice d'écart correspondant aux informations d'écart ; et la résolution des informations d'écart sur la base de la matrice de position géographique, de la matrice de position d'image, de la matrice de rotation PTZ et de la matrice d'écart, dans lequel les informations d'écart incluent au moins une erreur d'angle de lacet, une erreur d'angle de roulis et une erreur d'angle de tangage.

6. Procédé selon l'une quelconque des revendications 1-5, comprenant en outre :
l'obtention d'informations d'attitude PTZ cibles du dispositif de capture lorsque le dispositif de capture effectue une opération de capture sur une cible ; et
la détermination d'informations de positionnement de cible de la cible sur la base des informations d'attitude PTZ cible et des informations d'écart du dispositif de capture, incluant :
la détermination d'informations d'attitude PTZ cible corrigées sur la base des informations d'attitude PTZ cible et des informations d'écart ;
l'obtention d'informations de positionnement de dispositif du dispositif de capture ;
la détermination d'une distance horizontale entre la cible et le dispositif de capture ; dans lequel la distance horizontale est déterminée sur la base d'un système de coordonnées rectangulaires tridimensionnel d'un espace où le dispositif de capture est installé, pour le système de coordonnées, un axe z est une direction le long d'une direction d'altitude du dispositif de capture de bas en haut, un axe x est une direction le long d'une direction horizontale depuis la position du dispositif de capture jusqu'à la position de la cible ; et
la détermination des informations de positionnement de cible de la cible sur la base des informations de positionnement de dispositif, des informations d'attitude PTZ cible corrigées et de la distance horizontale.

7. Système de correction d'écart de positionnement mis en œuvre sur un dispositif informatique, comprenant :
au moins un dispositif de stockage stockant des instructions ;
au moins un dispositif de traitement en communication avec le au moins un dispositif de stockage, dans lequel, lors de l'exécution des instructions, le au moins un dispositif de traitement est configuré pour effectuer des opérations incluant :
l'obtention d'informations de position géographique d'au moins deux points de référence géographiques ;
pour chacun des au moins deux points de référence géographiques, l'obtention d'une image de référence du point de référence géographique collectée par un dispositif de capture en commandant un mécanisme panoramique-inclinaison-zoom (PTZ) du dispositif de capture jusqu'à une position spécifique, dans lequel l'image de référence inclut des informations de position d'image d'un point de référence d'image correspondant au point de référence géographique, et le point de référence d'image correspondant au point de référence géographique est situé au centre de la vue de capture du dispositif de capture ; et
la détermination d'informations d'écart du dispositif de capture sur la base des informations de position géographique et des informations de position d'image correspondant aux au moins deux points de référence géographiques, incluant :
pour chacun des au moins deux points de référence géographiques, l'obtention d'informations d'attitude PTZ de référence correspondant à l'image de référence, dans lequel les informations d'attitude PTZ de référence incluent un angle de tangage PTZ de référence et un angle de lacet PTZ de référence lorsque le dispositif de capture capture l'image de référence ; et
la détermination des informations d'écart du dispositif de capture sur la base des informations de position géographique correspondant aux au moins deux points de référence géographiques, des informations de position d'image correspondant aux au moins deux points de référence géographiques et des informations d'attitude PTZ de référence correspondant aux au moins deux points de référence géographiques.

8. Système selon la revendication 7, dans lequel, lorsque le dispositif de capture capture l'image de référence du point de référence géographique, le point de référence d'image correspondant au point de référence géographique est situé au centre d'une vue de capture du dispositif de capture.

9. Système selon l'une quelconque des revendications 7-8, dans lequel le au moins un dispositif de traitement est en outre configuré pour effectuer des opérations incluant :
l'obtention d'informations d'attitude PTZ cibles du dispositif de capture lorsque le dispositif de capture effectue une opération de capture sur une cible ; et
la détermination d'informations de positionnement de cible de la cible sur la base des informations d'attitude PTZ cible et des informations d'écart du dispositif de capture inclut :
la détermination d'informations d'attitude PTZ cible corrigées sur la base des informations d'attitude PTZ cible et des informations d'écart ;
l'obtention d'informations de positionnement de dispositif du dispositif de capture ;
la détermination d'une distance horizontale entre la cible et le dispositif de capture ; dans lequel la distance horizontale est déterminée sur la base d'un système de coordonnées rectangulaires tridimensionnel d'un espace où le dispositif de capture est installé, pour le système de coordonnées, un axe z est une direction le long d'une direction d'altitude du dispositif de capture de bas en haut, un axe x est une direction le long d'une direction horizontale depuis la position du dispositif de capture jusqu'à la position de la cible ; et
la détermination des informations de positionnement de cible de la cible sur la base des informations de positionnement de dispositif, des informations d'attitude PTZ cible corrigées et de la distance horizontale.

10. Support de stockage non transitoire lisible par ordinateur, le support de stockage stockant des instructions informatiques, dans lequel, lorsque l'ordinateur lit les instructions informatiques, l'ordinateur exécute un procédé de correction d'écart de positionnement, le procédé comprenant :
l'obtention d'informations de position géographique d'au moins deux points de référence géographiques ;
pour chacun des au moins deux points de référence géographiques, l'obtention d'une image de référence du point de référence géographique collectée par un dispositif de capture en commandant un mécanisme panoramique-inclinaison-zoom (PTZ) du dispositif de capture jusqu'à une position spécifique, dans lequel l'image de référence inclut des informations de position d'image d'un point de référence d'image correspondant au point de référence géographique, et le point de référence d'image correspondant au point de référence géographique est situé au centre d'une vue de capture du dispositif de capture ; et
la détermination d'informations d'écart du dispositif de capture sur la base des informations de position géographique et des informations de position d'image correspondant aux au moins deux points de référence géographiques, incluant :
pour chacun des au moins deux points de référence géographiques, l'obtention d'informations d'attitude PTZ de référence correspondant à l'image de référence, dans lequel les informations d'attitude PTZ de référence incluent un angle de tangage PTZ de référence et un angle de lacet PTZ de référence lorsque le dispositif de capture capture l'image de référence ; et
la détermination des informations d'écart du dispositif de capture sur la base des informations de position géographique correspondant aux au moins deux points de référence géographiques, des informations de position d'image correspondant aux au moins deux points de référence géographiques et des informations d'attitude PTZ de référence correspondant aux au moins deux points de référence géographiques.

11. Procédé selon la revendication 4, dans lequel la construction de la matrice de position géographique avec différents axes de coordonnées en lignes sur la base des informations de position géographique inclut :
la transformation de coordonnées correspondant aux informations de position géographique en coordonnées dans un système de coordonnées géocentriques, et
la construction de la matrice de position géographique sur la base des coordonnées dans le système de coordonnées géocentriques.

12. Procédé selon la revendication 5, dans lequel la construction de la matrice de rotation PTZ sur la base des informations d'attitude PTZ de référence et d'une erreur d'angle de lacet incluse dans les informations d'écart inclut :
la conversion des informations d'attitude PTZ et de l'erreur d'angle de lacet selon une relation de fonction trigonométrique pour obtenir des informations converties ; et
la construction de la matrice de rotation PTZ sur la base des informations converties de celles-ci selon les formules ci-dessous : $\begin{matrix}{R}_{yun} = \left[\begin{matrix}1 & 0 & 0 \\ 0 & cos \left({pitch}_{yuntai}\right) & - sin \left({pitch}_{yuntai}\right) \\ 0 & sin \left({pitch}_{yuntai}\right) & cos \left({pitch}_{yuntai}\right)\end{matrix}\right] ∗ \left[\begin{matrix}cos \left(yaw\right) & - sin \left(yaw\right) & 0 \\ sin \left(yaw\right) & cos \left(yaw\right) & 0 \\ 0 & 0 & 1\end{matrix}\right] \\ ∗ \left[\begin{matrix}cos \left({yaw}_{yuntai}\right) & - sin \left({yaw}_{yuntai}\right) & 0 \\ sin \left({yaw}_{yuntai}\right) & cos \left({yaw}_{yuntai}\right) & 0 \\ 0 & 0 & 1\end{matrix}\right]\end{matrix}$
où *R_{yun}* représente la matrice de rotation PTZ, *pitch_{yuntαi}* représente un angle de tangage PTZ, *yaw_{yuntαi}* représente un angle de lacet PTZ, et *yaw* représente l'erreur d'angle de lacet dans les informations d'écart.

13. Procédé selon la revendication 5, dans lequel
la construction d'une matrice d'écart correspondant aux informations d'écart inclut :
la conversion de l'écart angulaire dans les informations d'écart selon une relation de fonction trigonométrique pour obtenir un écart angulaire converti ; et la construction de la matrice d'écart sur la base de l'écart angulaire converti.
